Europäisches Patentamt

European Patent Office

Office européen des brevets

(11) Numéro de publication: **0 200 842 B1**

## FASCICULE DE BREVET EUROPEEN

(45) Date de publication de fascicule du brevet: **14.10.92**  (51) Int. Cl.⁵: **H04L 12/26**, H04L 1/24

(21) Numéro de dépôt: **85430016.7**

(22) Date de dépôt: **30.04.85**

(54) Modem de contrôle d'un réseau de modems.

(43) Date de publication de la demande:
**12.11.86 Bulletin  86/46**

(45) Mention de la délivrance du brevet:
**14.10.92 Bulletin  92/42**

(84) Etats contractants désignés:
**BE DE FR GB IT NL SE**

(56) Documents cités:
**EP-A- 0 053 212**
**US-A- 4 055 808**

**IBM TECHNICAL DISCLOSURE BULLETIN, vol. 26, no. 12, mai 1984, page 6636, New York, US; M. CHOOUET et al.: "Remote modem control"**

**IBM TECHNICAL DISCLOSURE BULLETIN, vol. 26, no. 7A, décembre 1983, pages 3258 -3259, New York, US; G. EPENOY et al.: "Data multiplexing in modems"**

**DATA COMMUNICATIONS, vol. 12, no. 9, septembre 1983, pages 145-153, New York, US; R.B. FREEMAN et al.: "Control SNA nets by diagnosing problems on-line"**

(73) Titulaire: **International Business Machines Corporation**
**Old Orchard Road**
**Armonk, N.Y. 10504(US)**
(84) Etats contractants désignés:
**BE DE GB IT NL SE**

(73) Titulaire: **Compagnie IBM FRANCE**
**5 Place Vendôme**
**F-75000 Paris 1er(FR)**
(84) Etats contractants désignés:
**FR**

(72) Inventeur: **Belloc, Jacques**
**6, rue Paul Bourget**
**F-06600 Antibes(FR)**
Inventeur: **Cholat-Namy, Jean**
**29, rue Delattre de Tassigny**
**F-06160 Juan-Les-Pins(FR)**
Inventeur: **Choquet, Michel**
**131 Chemin Roures**
**F-06140 Vence(FR)**
Inventeur: **Huon, Simon**
**Chemin du Trastour**
**F-06330 Roquefort Les Pins(FR)**

IBM TECHNICAL DISCLOSURE BULLETIN, vol. 26, no. 6, novembre 1983, page 2775, New York, US; J. CHOLAT NAMY et al.: "SDLC interface for modems"

IBM TECHNICAL DISCLOSURE BULLETIN, vol. 24, no. 7A, décembre 1981, pages 3508-3509, New York, US; J. CHOLAT-NAMY et al.: "Improved test procedure in transmission networks"

IBM TECHNICAL DISCLOSURE BULLETIN, vol. 21, no. 11, avril 1979, pages 4566-4567, New York, US; J. BARLET et al.: "Inter-DCE communications for maintenance loop tests on multipoint networks"

Inventeur: **Pilost, Daniel**
**224 CR4 de l'Adret**
**F-06610 la Gaude(FR)**
Inventeur: **Spagnol, Victor**
**12 bis Chemin des Collettes**
**F-06800 Cagnes Sur Mer(FR)**
Inventeur: **de Saint Michel, François**
**Ouartier Sainte Appolonie**
**F-06610 La Gaude(FR)**

(74) Mandataire: **Bonneau, Gérard et al**
**Compagnie IBM France Département de Propriété Intellectuelle**
**F-06610 La Gaude(FR)**

**Description**

La présente invention concerne les systèmes de transmission de données et plus particulièrement un modem de commande pour controler un réseau de modems.

Etat de la Technique

Il y a une demande croissante pour des grands réseaux de télécommunications incluant des grands réseaux de modems. L'évolution des technologies et la standardisation des protocoles d'échange des données permettent de satisfaire cette demande. Cependant la croissance des réseaux de modems en taille et en complexité est limitée par les moyens dont on dispose actuellement pour controler ces grands réseaux, par exemple, pour mesurer les performances des réseaux, pour déterminer les causes des problèmes rencontrés, et pour reconfigurer les réseaux. Une des difficultés rencontrées pour le contrôle des modems, vient de ce qu'en fonctionnement normal, les modems sont transparents aux signaux reçus des équipements terminaux de données (DTE) auxquels ils sont reliés. L'article "Network Problem- Determination Aids in Microprocessor-Based Modems", par S. Huon et R. Smith, dans IBM Journal of Research and Development, Vol. 25, N° 1, January 1981, décrit un système de contrôle d'une liaison par modems dans lequel, lorsqu'un DTE veut contrôler un modem local auquel il est attaché, il active une ligne, TC, de la jonction qui les relie, pour signaler au modem de passer en mode de test, puis lui transmet une commande de test sur la ligne "Données à transmettre", TD, de la jonction. Si la commande de test est pour le modem local, celui-ci effectue le test spécifié par la commande et retourne le résultat du test au DTE sur la ligne "Données reçues", RD, de la jonction. Si la commande de test est pour le modem éloigné qui communique avec le modem local, ce dernier arrête toute transmission à destination du modem éloigné, lui transmet un signal à une fréquence dite de service, qui fait passer le modem éloigné en mode de test, puis lui transmet la commande de test reçue du DTE à une cadence dite de service. Un inconvénient de ce système de contrôle est qu'il nécessite la présence du fil TC dans la jonction DTE-modem, alors que dans un réseau, les modems peuvent provenir de plusieurs constructeurs différents, et que sa mise en oeuvre dans un grand réseau à plusieurs niveaux de liaison soulève des problèmes, puisqu'un modem ne peut passer en mode de test qu'en réponse à une activation du fil TC ou un signal de mise en test à la fréquence de service. On retrouvera une description de la technique décrite dans cet article de S. Huon et R. Smith dans le document EP-A-0 053 212.

L'article "Inter-DCE Communications for Maintenance Loop Tests on Multipoint Networks, IBM Technical Disclosure Bulletin, Vol. 21, N° 11, Avril 1979, pages 4566-7, J. Barlet et al. décrit un système de test de réseau de modems dans lequel le DTE local initie l'opération de test on levant le fil RL relié au modem local. Ce dernier est alors prêt à reconnaitre les commandes issues du DTE local, qu'il retransmet à destination des autres modems à une faible cadence dite de service. En phase finale, les modems éloignés peuvent renvoyer la commande reçue du DTE local à ce dernier à la cadence de service.

Le brevet US-A-4,385,384 décrit un système de contrôle d'un réseau de modems dans lequel les commandes de test sont transmises sur les lignes au moyen d'un canal secondaire réservé à cet effet. Ce système nécessite bien sûr un équipement supplémentaire de canal secondaire par modem, et ayant été conçu pour des transmissions par ligne analogique, se prête mal à des réseaux complexes qui nécessitent des passages des données par des noeuds numériques.

Exposé de l'Invention

L'article "SDLC Interface for modems", IBM Technical Disclosure Bulletin, vol 26, n°6, November 1983 page 2775, décrit un réseau de communication dans lequel un dispositif est ajouté au processeur du modem éloigné, destiné à analyser et détecter un message de commande de test. Lorsqu'un message de commande est détecté, le modem perd sa transparence aux données et est mis dans un mode test en attente du message de test qui suit le message de commande qu'il a détecté. Mais il n'est pas indiqué dans cet article que le message de commande est transmis à la vitesse de un bit par baud qui constitue une des caractéristiques essentielles de l'invention.

L'objet de l'invention est de pallier ces inconvénients, et de fournir un procédé de contrôle d'un réseau de modem qui ne nécessite pas la présence de fils particuliers dans la jonction DTE-modem et dans lequel les commandes sont transmises à travers les mêmes trajets que ceux utilisés par les données, ce qui permet à l'invention d'être utilisée dans des grands réseaux comportant aussi bien des liaisons analogiques que des liaisons numériques.

D'autres objets, caractéristiques et avantages de la présente invention ressortiront mieux de l'exposé qui suit, fait en référence aux dessins annexés à ce texte, qui représentent deux modes de réalisation préférés de l'invention.

D'un manière générale, l'invention propose un modem de commande pour contrôler un réseau de modems qui comprend un équipement terminal de données, connecté au modem de commande par une voie de transmission de données et une voie de réception de données sur lesquelles l'équipement terminal de données transmet et reçoit des messages de données et de commande, respectivement, et, un modem éloigné relié au modem de commande par un milieu de transmission, chacun des modems fonctionnant en mode de données à une cadence de transmission de n bits par baud, n étant un nombre entier positif supérieur à un, et l'équipement terminal de données étant relié au premier modem, le modem de commande comprenant un processeur ayant des moyens pour effectuer la surveillance permanente du contenu des messages reçus de l'équipement teminal de données sur la voie de transmission de données, de façon à détecter la transmission par l'équipement terminal de données désirant initier un contrôle du réseau de modems, sur la voie de transmission de données, d'un message de commande comprenant un premier moyen d'identification, un moyen d'adressage, et un moyen de commande. Le modem de commande est caractérisé en ce que le processeur comprend:

un premier moyen d'emmagasinage du message de commande reçu sur la voie de transmission de données lorsque le modem de commande a détecté dans ce message la présence du premier moyen d' identification et celle de sa propre adresse dans le moyen d'adressage,

un moyen de génération à partir du message de commande d'un premier message de supervision comprenant un second moyen d'identification, et le moyen d'adressage et le moyen de commande qui étaient contenus dans le message de commande, lorsque ce dernier spécifie une commande pour le modem éloigné, et

un premier moyen de transmission sur le milieu de transmission d'une séquence de mise en route, puis du premier message de supervision, le premier message de supervision étant transmis à la cadence de un bit par baud quelle que soit la cadence des données échangées entre le modem de commande et le modem éloigné.

Selon un autre aspect de l'invention, le modem éloigné comprend en outre un processeur ayant un moyen de réception de la séquence de mise en route transmise par le modem de commande,

un moyen de commande pour le passage à une réception à la cadence de un bit par baud à la fin de la réception de la séquence de mise en route, et la surveillance du contenu des messages reçus du modem de commande après la séquence d'initialisation, à la cadence de un bit par baud,

un moyen d'emmagasinage du premier message de supervision reçu du milieu de transmission lorsque le moyen de commande a détecté dans ce message la présence du second moyen d'identification et l'adresse du modem de commande dans le moyen d'adressage,

un moyen d'exécution de la commande spécifiée par le moyen de commande contenu dans le premier message de supervision reçu,

un moyen d'élaboration d'un rapport contenant le résultat de l'exécution de la commande,

un moyen de génération d'un second message de supervision comprenant le contenu du premier message de supervision reçu auquel est adjoint le rapport, et

un moyen de transmission sur le milieu de transmission d'une séquence de mise en route et du second message de supervision, le second message de supervision étant transmis à la cadende de un bit par baud quelle que soit la cadence des données échangées entre le modem de commande et le modem éloigné.

L'invention propose aussi un modem de commande local pour contrôler un réseau de modems qui comprend un équipement terminal de données, connecté au modem de commande et un modem éloigné relié au modem de commande par un milieu de transmission, chacun des modems comprenant plusieurs canaux et un modem de base et échangeant entre eux des bits de données à une cadence de transmission de n bits par baud, n étant un nombre entier positif supérieur à un, l'équipement terminal de données étant relié à chacun des canaux du modem de commande par une voie de transmission de données et une voie de réception de données sur lesquelles l'équipement terminal de données transmet et reçoit des messages de données et de commande, respectivement, le modem de commande comprenant un processeur ayant des moyens pour effectuer la surveillance permanente par le modem de commande du contenu des messages reçus de l'équipement terminal de données sur chacune des voies de transmission de données reliées à l'équipement terminal de données, de façon à détecter la transmission par l'équipement terminal de données désirant initier un contrôle du réseau de modems, sur l'une des voies de transmission de données, d'un message de commande comprenant un premier moyen d'identification, un premier moyen d'adressage, un indicateur de mode de transmission, et un moyen de commande. Le modem de commande est caractérisé en ce qu'il comprend un processeur ayant :

un premier moyen d emmagasinage du message de commande reçu sur une des voies de transmission

4

lorsque la présence de premier moyen d'identification et celle de l'adresse du modem de commande ont été détectées dans ce message,

un moyen de génération, à partir du message de commande reçu, d'un premier message de supervision comprenant un second moyen d'identification, un second moyen d'adressage identifiant celui des canaux du modem de commande qui a reçu le message de commande, et le premier moyen d'adressage, l'indicateur de mode transmission et le moyen de commande qui étaient contenus dans le message de commande reçu, lorsque l'indicateur de mode de transmission spécifie un premier mode de transmission, et le moyen de commande spécifie une commande pour le modem éloigné, et

un premier moyen de transmission sur le milieu de transmission d'une séquence de mise en route puis du premier message de supervision, le premier message de supervision étant transmis à la cadence de un bit par baud quelle que soit la cadence des données échangées entre le modem de commande et le modem éloigné.

Brève description des figures

La figure 1 est un bloc diagramme d'un réseau de modems pouvant incorporer l'invention.

La figure 2 est un schéma qui illustre le trajet des messages pour le contrôle d'un modem par le DTE auquel il est attaché.

La figure 3 est un schéma qui illustre le trajet des messages dans le cas d'une commande éloignée/mode supervision.

La figure 4 est un schéma qui illustre le trajet des messages dans le cas d'une commande locale n'impliquant qu'un canal d'un modem multicanal.

La figure 5 est un schéma qui illustre le trajet des messages dans le cas d'une commande locale impliquant le modem de base d'un modem multicanal.

La figure 6 est un schéma qui illustre le trajet des messages dans le cas d'une commande éloignée/mode supervision pour un modem multicanal.

La figure 7 est un schéma qui illustre le trajet des messages dans le cas d'une commande éloignée/mode de données pour un modem multicanal.

La figure 8 est un schéma qui illustre le trajet des messages dans le cas d'une commande pour un modem primaire éloigné dans une liaison de second niveau.

La figure 9 est un schéma qui illustre le trajet des messages dans le cas d'une commande pour un modem secondaire éloigné dans une liaison de second niveau.

La figure 10 est un bloc diagramme qui illustre un exemple de réalisation d'un modem incorporant l'invention.

La figure 11 composée des figures 11A et 11B est un bloc diagramme qui illustre un exemple de réalisation d'un modem multicanal incorporant l'invention.

Description de l'Invention

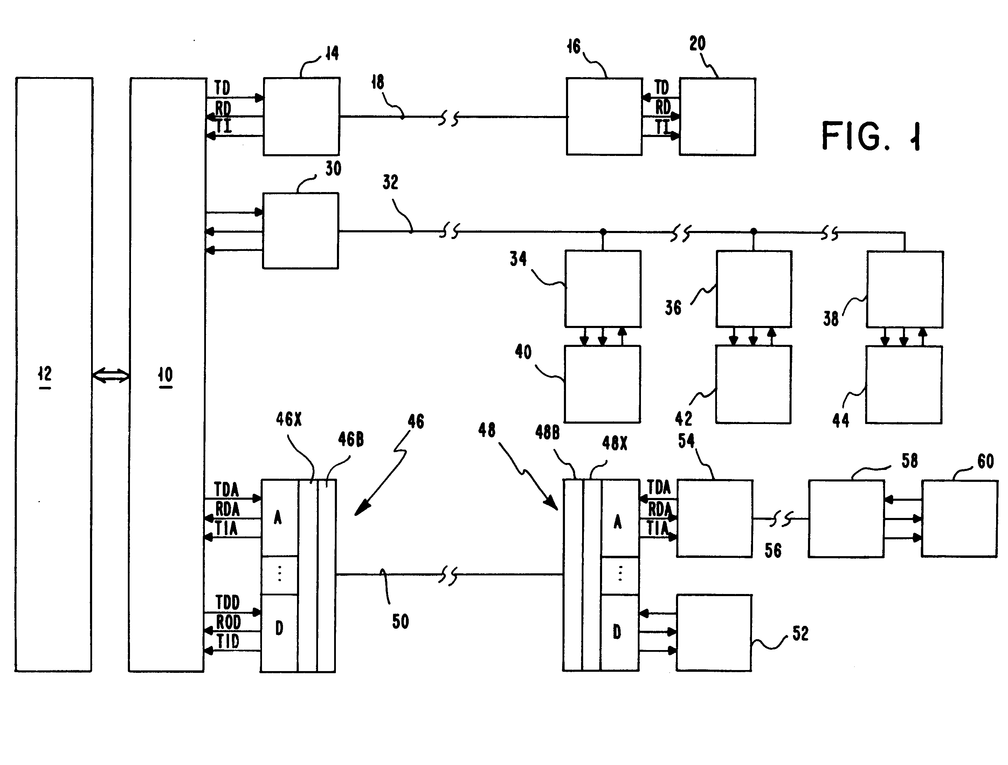

On a représenté sur la figure 1 le schéma typique d'un réseau de modems incorporant l'invention. Un équipement terminal de données (DTE) central 10 qui peut être constitué, par exemple, par un contrôleur de communications du type IBM 3725, est relié d'une part à une unité centrale de traitement 12, qui peut être du type IBM 3081, et d'autre part à un réseau de modems. Le réseau de modems peut comporter plusieurs liaisons par modems, et à titre d'exemple, on a illustré sur la figure 1 trois types de liaisons par modems: une liaison point à point, une liaison multipoint, et une liaison à deux niveaux par modems multicanaux. Le DTE central 10 peut, bien sûr, être constitué par un contrôleur de noeud de réseau. La liaison point à point comprend un modem local 14 directement relié au DTE central 10, et qui communique avec un modem éloigné 16 à travers une ligne de transmission 18. Le modem éloigné 16 est attaché directement à un équipement terminal de données (DTE) 20. La liaison multipoint comprend un modem primaire local 30 relié directement au DTE central 10, et qui communique à travers une ligne de transmission commune 32 avec plusieurs modems secondaires éloignés qu'on a illustrés sur la figure 1 par trois modems secondaires éloignés 34, 36, et 38. Les modems 34, 36, et 38 sont attachés directement à trois DTE 40, 42, et 44, respectivement. La liaison à deux niveaux comprend un modem multicanal local 46 dont les canaux sont directement relié au DTE central 10, et qui communique avec un modem multicanal éloigné 48 à travers une ligne 50. Dans l'exemple illustré sur la figure 1, chacun des modems 46 et 48 comprend, de façon conventionnelle quatre canaux, A-D, un dispositif de multiplexage/démultiplexage, et un modem de base, désignés respectivement 46X et 48X, et 46B et 48B. Le modem multicanal éloigné 48 a le canal D relié directement à un DTE 52, le canal A relié à un modem primaire éloigné 54, et ses deux autres

EP 0 200 842 B1

canaux reliés à des dispositifs ou liaisons par modems non représentés sur la figure 1. Le modem 54 communique à travers une ligne 56 avec un modem secondaire éloigné 58 qui est directement attaché à un DTE 60. Chacun des modems 14, 30, 16, 34, 36, 38, 54 et 58, et chacun des canaux des modems multicanaux 46 et 48 est relié à l'équipement central de commande ou au DTE ou à un autre modem auquel il est attaché par une jonction du type V24 défini par le CCITT. Dans un souci de simplification chacune de ces jonctions a été illustrée par trois de ses fils, le fil "Données à transmettre" (TD), le fil "Données reçues" (RD), et le fil "Indicateur de test" (TI). Les fils TD, RD, et TI des canaux A-D sont référencés TDA, RDA, TIA, ...TDD, RDD, TID, respectivement. Les modems 14, 16, 30, 34, 36, 38, 54, et 58 peuvent être, par exemple, des modems IBM 3863, IBM 3864, ou IBM 3865, modifiés de façon à incorporer l'invention comme il sera décrit plus loin. Les modems multicanaux 46 et 48 peuvent être, par exemple, des modems IBM 3865 avec l'option mutiplexage et modifiés de façon à incorporer l'invention.

Selon l'invention, un DTE quelconque peut contrôler les modems auxquels il est relié en leur envoyant des messages de commande, et en analysant les messages de rapport qu'il reçoit en retour. Selon un mode de réalisation préféré de l'invention, les DTE et les modems échangent les messages de commande et de rapport au moyen de trames d'information non séquentielles prévues par la procédure "Synchronous Data Link Control" (SDLC). La procédure SDLC est une procédure connue qui est conforme à la procédure normalisée "High Level Data Link Control" (HDLC), et qui est décrite dans, par exemple, le document public IBM "IBM Synchronous Data Link Control-General Information", Document No GA27-3093-2.

Le format des messages de commande est le suivant :

F, A, N, H, I, AM, C, <P>, FCS, F

où :

F = Délimiteur de trame SDLC (1 octet = '7E')

A = Champ d'adresse SDLC (1 octet = 'FD')

N = Champ de commande SDLC (1 octet = '1B')

H = En-tête de commande. Cet en-tête signale au modem que ce qui suit est un message de commande. (8 octets = '05 10 42 08 21 84 10 42')

I = Identificateur de 2 octets de longueur. Son contenu sera décrit plus loin.

AM = Champ d'adresse de modem. (2 octets)
Ce champ contient l'adresse du modem qui doit intercepter le message de commande, et celle du modem destinataire du message.

C = Code de commande. (1 octet). Différentes valeurs de ce code de commande seront décrites plus loin.

<P> = Paramètres de commande. Il s'agit d'un champ optionnel destiné à compléter l'octet de commande si nécessaire.

FCS = Champ de séquence de contrôle de trame SDLC. (2 octets)

(Dans ce qui précède, les guillemets ' ' indiquent une valeur en notation hexadécimale.)

L'identificateur I du message de commande a une longueur de 2 octets, et son contenu est le suivant :

Octet 0

| L | M | C | S | R | E | 0 | 0 |
|---|---|---|---|---|---|---|---|
| 0 | 1 | 2 | 3 | 4 | 5 | 6 | 7 |

Bit 0 (L) : Mode de test
Lorsque ce bit est 1, il indique un mode de test conforme à l'invention.

Bit 1 (M) : Mode de transmission de commande.
Utilisé uniquement avec des modems multicanaux. Il indique comment une commande doit être transmise du modem local au modem éloigné.
= 0 : transmission en mode supervision. Ce mode de transmission propre à l'invention sera décrit en détails plus loin.
= 1 : Transmission en mode de données.

Bit 2 (C) : Commande/Rapport
= 0 : Commande
= 1 : Rapport

6

Bit 3 (S) :      Information système

        = 0 : Commande issue par le DTE central pour rassembler des données statistiques.

        = 1 : Commande issue par le DTE central après détection d'une panne de liaison.

Bit 4 (R) :      Commande initiale/répétée

        = 0 : Commande initiale.

        = 1 : Commande répétée par le DTE.

Bit 5 (E) :      Autorisation de répétition de commande.

        = 0 : Autorise la répétition d'une commande par le modem local à destination d'un modem éloigné en cas de non réponse à une commande ou de rapport en erreur.

        = 1 : N'autorise pas la répétition d'une commande.

Bits 6 et 7 :      maintenus à 0.

Octet 1

Réservé pour des utilisations futures.

Le code de commande a une longueur de un octet, et son contenu est le suivant :

```
       0    0        G              N
       0    1    2    3    4    5    6    7
```

Bits 0 et 1 :      Maintenus à 0.

Bits 2 et 3 (G) :      Groupe de commande.

        = 01 : Commandes de détermination de problèmes.

        = 10 : Commandes d'opérations.

Bits 4 à 7 (N) :      Numéro de commande.

        = 0000 à 1111 : Ce numéro spécifie la nature de la commande. A titre d'exemple on trouvera ci-dessous une liste non exhaustive de commandes.

        . auto-test local

        . auto-test éloigné

        . état du modem local/éloigné

        . état de la liaison

        . état interface DTE local/éloigné

        . analyse de ligne

        . lecture configuration locale/éloignée

        . écriture configuration locale/éloignée

        . etc...

Le format des messages de rapport est le suivant :

F, A, N, L, K, I, AM, C, <P>, SB, D, FCS, F

où :

F =      Délimiteur de trame SDLC (1 octet = '7E')

A =      Champ d'adresse SDLC (1 octet = 'FD')

N =      Champ de commande SDLC (1 octet = '1B')

L =      Champ de longueur. (1 octet)

      Ce champ indique le nombre d'octets du message de rapport.

K =      Clé. (1 octet = '50')

      Cet octet indique que les données qui suivent constituent une réponse à une commande de modem.

I =      Identificateur de message de 2 octets de longueur. Son contenu sera décrit plus loin.

AM =      Adresse de modem. (2 octets)

      Retransmission du champ AM du message de commande.

C =      Code de commande. (1 octet)

      Retransmission du champ C du message de commande.

<P> =      Paramètres de commande.

      Retransmission du champ <P> du message de commande.

SB =      Octet de détection. (1 octet)

      Cet octet contient un code de retour qui est significatif lorsqu'une exception s'est produite lors de la détection de la commande ou lors de l'exécution de la commande. Ces codes peuvent indiquer par exemple:

. Le message de commande était trop long, il n'a pas été décodé.

. Le message de commande a été reçu avec un FCS en erreur. Ceci commande une retransmission du message de commande par le DTE.

. L'exécution du message de commande nécessite un dispositif qui n'est pas installé.

. etc...

D =     Champ de données. (0 à n octets)

Ce champ contient le rapport du modem qui a intercepté la commande et/ou celui du modem qui a exécuté la commande.

FCS =     Champ de séquence de contrôle de trame SDLC. (2 octets)

L'identificateur I du message de rapport a une longueur de 2 octets, et son contenu est le suivant :

Octet 0

| L | M | C | E | R | 0 | 0 | 0 |
|---|---|---|---|---|---|---|---|
| 0 | 1 | 2 | 3 | 4 | 5 | 6 | 7 |

Bit 0 (L) :     Mode de test

Lorsque ce bit est 1, il indique un mode de test conforme à l'invention.

Bit 1 (M) :     Mode de transmission de commande.

Utilisé uniquement avec des modems multicanaux. Il indique comment une commande doit être transmise du modem local au modem éloigné.

= 0 : Transmission en mode supervision.

= 1 : Transmission en mode de données.

Bit 2 (C) :     Commande/Rapport

= 0 : Commande

= 1 : Rapport

Bit 3 (E) :     Exception

= 0 : La commande a été exécutée correctement, et un champ de données suit. L'octet de détection est mis à zéro.

= 1 : Une exception s'est produite. la nature de cette exception est indiquée dans l'octet de détection.

Bit 4 (R) :     Retransmission

= 0 : Pas de retransmission effectuée par le modem.

= 1 : Le modem local a retransmis le message de commande.

Bits 5-7 :     Maintenus à 0.

Octet 1

Réservé pour des utilisations futures.

(Dans la description qui suit, et dans un souci de simplification, on omettra volontairement le champ <P> dans les différents messages)

Description générale

On décrira maintenant de façon générale le procédé de contrôle de réseau de l'invention en se référant à la figure 1.

Contrôle d'un modem par le DTE auquel il est attaché.

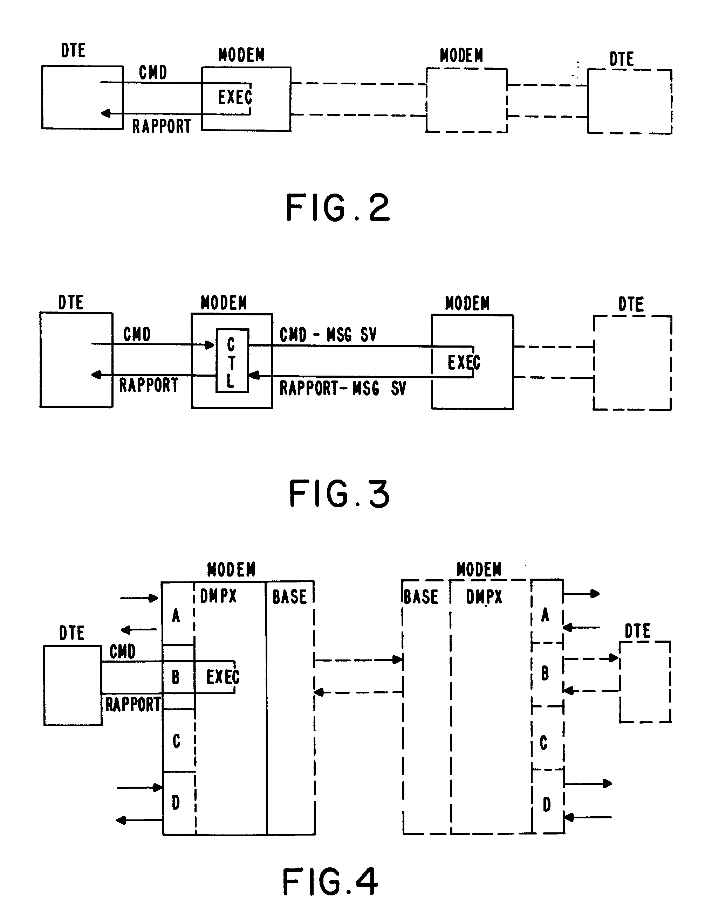

Un DTE, par exemple, le DTE central 10, contrôle un modem qui lui est attaché, par exemple le modem 14, en lui envoyant sur le fil "Données à transmettre" TD un message de commande du type dit message de commande locale. Ce message a le format de message de commande décrit plus haut. Lorsque le modem détecte l'en-tête H dans la trame SDLC qu'il reçoit sur le fil TD, il vérifie si son adresse est contenue dans le champ d'adresse de modem AM. Si son adresse n'est pas contenue dans le champ AM, le modem ignore le contenu du message. Si son adresse est contenue dans le champ AM, le modem intercepte et emmagasine le message de commande, et force la transmission de bits "1" sur la ligne de transmission. Le modem vérifie la validité du message de commande (format, octet de commande, paramètres, FCS,...). Si le message est trouvé invalide, le modem construit un message de rapport identifiant les raisons de cette invalidité, en plaçant le code approprié dans l'octet de détection SB, et transfère le message de rapport au DTE sur son fil "Données reçues" RD. Si le message de commande est trouvé valide, le modem exécute la commande spécifiée par le message, construit un message de rapport et l'envoie au DTE sur son fil RD. Ce type de contrôle d'un modem est illustré schématiquement sur la figure 2.

Contrôle d'un modem éloigné.

Un DTE, par exemple, le DTE central 10, contrôle un modem éloigné, par exemple le modem 34, en envoyant au modem local 30 relié au modem éloigné 34 un message de commande du type dit message de commande éloignée/mode supervision, sur le fil TD. Ce message a le format de message de commande décrit plus haut. Lorsque le modem local 30 détecte l'en-tête H dans la trame SDLC qu'il reçoit sur le fil TD, il vérifie si son adresse est contenue dans le champ d'adresse de modem AM. Si son adresse n'est pas contenue dans le champ AM, le modem ignore le contenu du message. Si son adresse est contenue dans le champ AM, le modem intercepte et emmagasine le message de commande, force la transmission de bits "1" sur la ligne de transmission et vérifie la validité du message de commande (format, octet de commande, paramètres, FCS,...). Si le message est trouvé invalide, le modem construit un message de rapport identifiant les raisons de cette invalidité, et transfère le message de rapport au DTE sur son fil "Données reçues" RD. Si le message de commande est trouvé valide, le modem local 30 construit un message dit de supervision à partir du message de commande, et transmet ce message de supervision sur la ligne de transmission, en un mode de transmission dit mode de supervision. Le message de supervision véhiculant le message de commande a le format suivant :

F, SH, I, AM, C, FCS, F

Le champ SH est un en-tête de supervision qui est utilisé pour identifier les messages de supervision. Il a une longueur de un octet et contient l'information suivante :

Bit 0 :           Vitesse
                      = 0 : Vitesse de repli
                      = 1 : Vitesse nominale

Bit 1 :           Répétition
                      = 1 : Le modem qui reçoit ce message stoppe toute transmission sur la ligne puis recommence une nouvelle transmission du message de supervision.

Bit 2 :           Effacement de l'indicateur de perte de porteuse.
                      = 1 : Le modem qui reçoit ce message ignore toute indication de perte de porteuse.

Bit 3 :           Mode de test
                     Lorsque ce bit est 1, il indique un mode de test conforme à l'invention.

Bit 4 :           Origine de la commande
                      = 0 : DTE

Bits 5-6 :      Non utilisés

Bit 7 :           Lorsque ce bit est à 1, le modem destinataire du message de commande emmagasine le message de supervision.

Le contenu des champs I, AM, C, est celui des champs de même nom du message de commande intercepté par le modem local 30.

Le mode de transmission de supervision est le suivant: Le modem stoppe toute transmission sur la ligne, puis transmet une séquence de mise en route (TS) conventionnelle, du type de celles recommandées par les Avis V27 et V29 du CCITT. La séquence de mise en route est transmise sur la ligne de façon conventionnelle, exactement comme lorsqu'elle précède un message de données, et comme indiqué, par exemple dans les Avis CCITT précités. Le message de supervision est transmis à la cadence de un bit par baud, quelle que soit la vitesse utilisée par les modems 30 et 34 pour communiquer entre eux. Par exemple, dans une liaison modem à modem avec une vitesse nominale de 9 600 bits par seconde conforme à l'Avis V29 du CCITT, dans laquelle la cadence baud est 2 400, et quatre bits de données sont transmis à chaque temps baud, le message de supervision est transmis à la cadence de un bit par temps baud. Ce procédé de transmission est lent mais permet une réception beaucoup plus sûre du message de supervision par le modem destinataire. A la fin du message de supervision, le modem local peut transmettre des données de façon conventionnelle et à la cadence désirée.

Lorsque le modem éloigné 34 reçoit une séquence de mise en route, il en attend la fin puis passe à la vitesse de un bit par baud pour surveiller la présence d'un message de supervision indiquée par un en-tête de supervision. Lorsqu'un message de supervision est détecté, il est stocké dans le modem éloigné 34 pour analyse. Si l'adresse du modem 34 n'est pas contenue dans le champ d'adresse de modem AM, le modem 34 ignore le contenu du message. Si son adresse est contenue dans le champ AM, le modem vérifie la validité du message de commande (format, octet de commande, paramètres, FCS,...). Si le message est trouvé invalide, le modem construit un message de rapport identifiant les raisons de cette invalidité, et le transmet au modem local à l'intérieur d'un message de supervision transmis en mode supervision. Si le message de commande est trouvé valide, le modem 34 exécute la commande spécifiée par le message, et construit un message de rapport et un message de supervision contenant ce message de rapport. Un tel message de supervision a le format suivant:

F, SH, I, AM, C, DR, FCS, F

Le contenu des champs I, AM, C, est celui des champs de même nom du message de supervision reçu, et DR contient le rapport du modem éloigné. Le message de supervision/rapport est transmis au modem local 30 en mode de supervision.

Au niveau du modem local 30, si aucun message de supervision contenant un message de rapport n'est reçu dans un intervalle de temps prédéterminé, et si l'état du bit 5 (E) dans l'identificateur du message de commande reçu du DTE n'autorise pas la répétition de la commande, le modem local 30 prépare un message de rapport indiquant "pas de rapport". Si un message de supervision erroné est reçu de la ligne de transmission, et si l'état du bit 5 (E) dans l'identificateur du message de commande reçu du DTE n'autorise pas la répétition de la commande, le modem local 30 prépare un message de rapport indiquant "rapport erroné".

Si aucun message de supervision contenant un message de rapport n'est reçu dans un intervalle de temps prédéterminé, ou un message de supervision erroné est reçu de la ligne, alors que l'état du bit 5 (E) dans l'identificateur du message de commande reçu du DTE autorise la répétition de la commande, le modem local 30 restaure ce bit 5 puis retransmet le message de supervision. Si un message de supervision contenant un message de rapport est reçu à temps et est correct, le modem local 30 prépare un message de rapport à partir du message de rapport reçu du modem éloigné, et le transmet au DTE sur sa ligne RD. Ce type de contrôle d'un modem éloigné est illustré schématiquement sur la figure 3.

Contrôle d'un modem multicanal par le DTE auquel il est attaché.

Un DTE, par exemple, le DTE central 10, contrôle chacun des canaux des modems multicanaux qui lui sont attachés, par exemple, ceux du modem multicanal 46, ou le modem de base du modem multicanal au moyen de messages de commande du type message de commande locale. Chacun des canaux surveille le train de bits reçu sur son fil TD. Lorsqu'un canal détecte l'en-tête H dans la trame SDLC qu'il reçoit sur son fil TD, il vérifie si l'adresse du modem multicanal 46 est contenue dans le champ d'adresse de modem AM. Si cette adresse n'est pas contenue dans le champ AM, le canal ignore le contenu du message. Si l'adresse du modem multicanal 46 est contenue dans le champ AM, le canal intercepte et emmagasine le message de commande, et force la transmission de bits "1" sur ce canal, à destination du modem multicanal éloigné. Le canal vérifie la validité du message de commande (format, octet de commande, paramètres, FCS,...). Si le message est trouvé invalide, le canal construit un message de rapport identifiant les raisons de cette invalidité, et transfère le message de rapport au DTE sur son fil "Données reçues" RD. Si le message de commande est trouvé valide, la commande est décodée. Deux cas peuvent se présenter; la commande implique uniquement le canal, ou la commande implique le modem de base. Si la commande n'implique que le canal, celui-ci exécute la commande, construit un message de rapport, et transfère ce message au DTE sur son fil RD. Ce type de contrôle d'un modem est illustré schématiquement sur la figure 4.

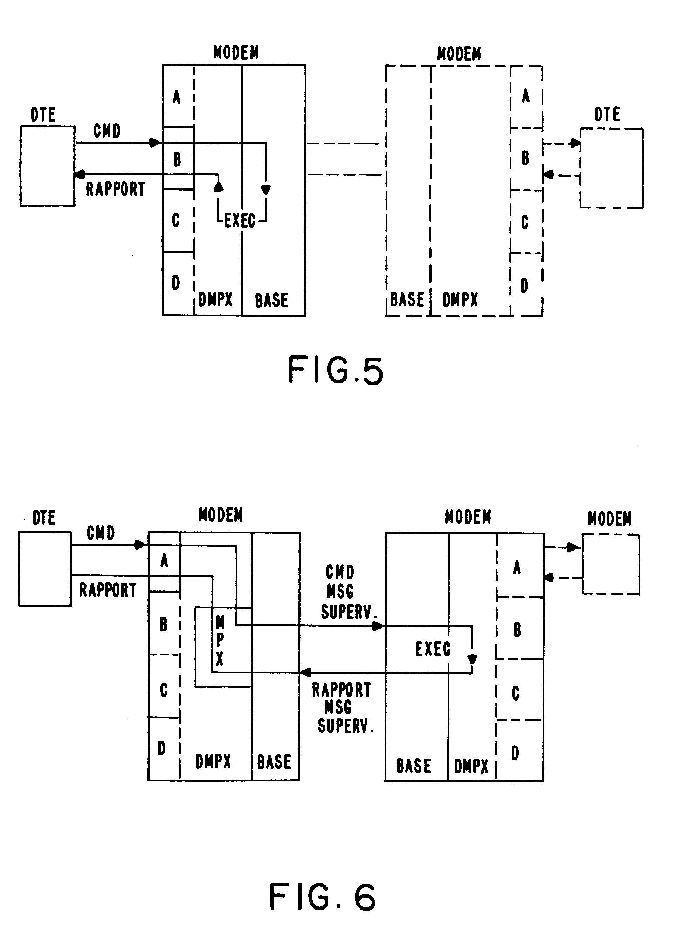

Si la commande implique le modem de base, le canal lui transfère le message de commande et attend un message de rapport de celui-ci. La commande est exécutée dans le modem de base, et celui-ci construit un message de rapport qu'il transfère au canal. Ce dernier transfère alors le message de rapport au DTE sur son fil RD. Ce type de contrôle d'un modem est illustré schématiquement sur la figure 5.

Contrôle d'un modem multicanal éloigné.

Un DTE, par exemple, le DTE central 10, contrôle chacun des canaux des modems multicanaux éloignés qui lui sont reliés, par exemple, ceux du modem multicanal 48, ou le modem de base 48B du modem multicanal éloigné au moyen de messages de commande du type message de commande éloignée/ mode supervision ou du type message de commande éloignée/mode de données. Chacun des canaux du modem multicanal 46 surveille le train de bits reçu sur son fil TD. Lorsqu'un canal détecte l'en-tête H dans la trame SDLC qu'il reçoit sur son fil TD, il vérifie si l'adresse du modem multicanal 46 est contenue dans le champ d'adresse de modem AM. Si cette adresse n'est pas contenue dans le champ AM, le canal ignore le contenu du message. Si l'adresse du modem multicanal 46 est contenue dans le champ AM, le canal intercepte et emmagasine le message de commande, et force la transmission de bits "1" sur ce canal, à destination du modem multicanal éloigné 48. Le canal vérifie la validité du message de commande (format, octet de commande, paramètres, FCS,...). Si le message est trouvé invalide, le canal construit un message de rapport identifiant les raisons de cette invalidité, et transfère le message de rapport au DTE sur son fil RD. Si le message de commande est trouvé valide, la commande est décodée. Deux cas peuvent se présenter:

- le message de commande doit être transmis en mode supervision (bit 1 (M) de l'identificateur I du message de commande à "0").
- le message de commande doit être transmis en mode de données (bit 1 (M) à "1").

1) Transmission du message de commande en mode de supervision.

Le canal transfère le message de commande au modem de base qui construit à partir de ce dernier un message de supervision qu'il transmet sur la ligne de transmission en mode de supervision. Le canal attend ensuite un message de rapport du modem éloigné 48. La séquence de supervision utilisée ici est semblable à celle utilisée pour les échanges de messages dans les liaisons à modems non multicanaux, seul le message de supervision est légèrement modifié comme indiqué ci-dessous. Le message de supervision qui véhicule le message de commande dans le cas de modems multicanaux a le format suivant:

F, SH, CH, I, AM, C, FCS, F

Le contenu des champs SH, I, AM, et C est celui des champs de même nom du message de commande intercepté par le canal. Le champ CH contient un octet spécifiant l'adresse du canal qui a reçu le message de commande. Après avoir transmis le message de supervision, le modem de base 46B attend un message de supervision contenant le message de rapport du modem multicanal éloigné 48. Lorsque le modem multicanal éloigné 48 reçoit une séquence de mise en route, il en attend la fin puis surveille la présence d'un message de supervision indiquée par un en-tête de supervision. Lorsqu'un message de supervision est détecté, il est stocké dans le modem 48 pour analyse. Si l'adresse du modem 48 n'est pas contenue dans le champ d'adresse de modem AM, le modem 48 ignore le contenu du message. Si son adresse est contenue dans le champ AM, le modem vérifie la validité du message de commande (format, octet de commande, paramètres, FCS,...). Si le message est trouvé invalide, le modem construit un message de rapport identifiant les raisons de cette invalidité, pour transmission sur la ligne à destination du modem multicanal local 46, au moyen d'un message de supervision. Si le message de commande est trouvé valide, le modem 48 décode la commande pour déterminer si celle-ci implique son modem de base ou non. Si la commande n'implique qu'un canal dont l'adresse est contenue dans le champ CH, le modem de base lui passe le message de commande. Le canal exécute la commande, construit un message de rapport, et le passe au modem de base 48B qui le transmet sur la ligne, au moyen d'un message de supervision. Si la commande implique le modem de base, celui-ci exécute la commande, et construit un message de rapport qu'il transmet sur la ligne au moyen d'un message de supervision ayant le format suivant :

F, SH, CH, I, AM, C, DR, FCS, F

Le contenu des champs SH, CH, I, AM, et C est celui des champs de même nom du message de commande de supervision reçu, et DR contient le rapport du modem éloigné. Le message de supervision est transmis au modem local 46 à l'intérieur d'une séquence de supervision semblable à la séquence de supervision reçu du modem local, et en transmission en mode de supervision.

Au niveau du modem multicanal local 46, si aucun message de rapport n'est reçu dans un intervalle de temps prédéterminé, et si l'état du bit 5 (E) dans l'identificateur du message de commande reçu du DTE n'autorise pas la répétition de la commande, le modem de base prépare un message de rapport indiquant "pas de rapport". Si un message de supervision erroné est reçu de la ligne, et si l'état du bit 5 (E) dans l'identificateur du message de commande reçu du DTE n'autorise pas la répétition de la commande, le modem de base prépare un message de rapport indiquant "rapport erroné". Si aucun message de rapport n'est reçu dans un intervalle de temps prédéterminé, ou si un message de supervision erroné est reçu de la ligne, alors que l'état du bit 5 (E) dans l'identificateur du message de commande reçu du DTE autorise la répétition de la commande, le modem de base restaure ce bit 5 puis retransmet le message de supervision. Si un message de supervision contenant un message de rapport est reçu à temps et est correct, le modem de base prépare un message de rapport à partir du message de supervision reçu, et le transmet au canal dont l'adresse est contenue dans le champ CH pour transfert au DTE sur son fil RD. Ce type de contrôle d'un modem multicanal éloigné est illustré schématiquement sur la figure 6.

2) Transmission du message de commande en mode de données.

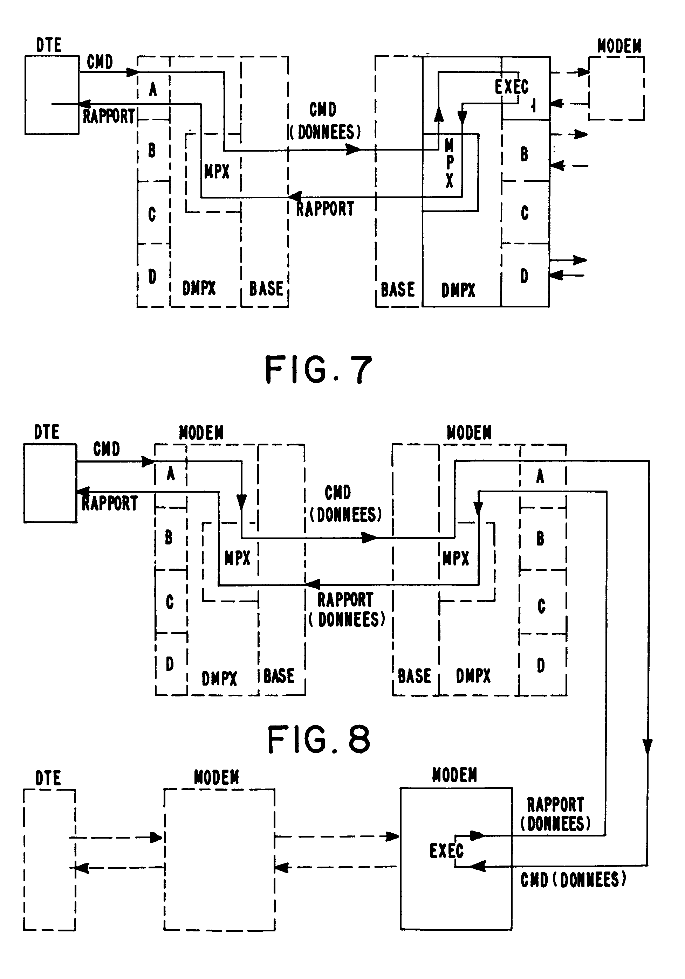

Lorsque le message de commande intercepté par le canal doit être transmis en mode de données, le canal transmet le message de commande reçu dans le train de données, à la cadence normale des données, et attend un message de rapport du modem éloigné. Au niveau du modem multicanal éloigné 48, chacun des canaux surveille le train de bits reçu du modem de base 48B. Lorsqu'un canal détecte l'en-tête H dans ce train de bits, il vérifie si l'adresse du modem multicanal 48 est contenue dans le champ d'adresse de modem AM. Si cette adresse n'est pas contenue dans le champ AM, le canal ignore le contenu du message. Si l'adresse du modem multicanal 48 est contenue dans le champ AM, le canal intercepte et emmagasine le message de commande, et force la transmission de bits "1" sur son fil RD. Le canal vérifie la validité du message de commande (format, octet de commande, paramètres, FCS,...). Si le message est trouvé invalide, le canal construit un message de rapport identifiant les raisons de cette invalidité, et transmet ce message de rapport sur la ligne en mode de données. Si le message de commande est trouvé valide, la commande est décodée. Si la commande n'implique que le canal, celui exécute la commande, construit un message de rapport, et transmet le message de rapport sur la ligne en mode de données. Si la commande implique le modem de base 48B, le canal lui transfère le message de commande et attend un message de rapport de celui-ci. La commande est exécutée dans le modem de base, et celui-ci construit un message de rapport qu'il transfère au canal. Ce dernier transfère alors le message de rapport sur la ligne en mode données. Ce type de contrôle d'un modem est illustré schématiquement sur la figure 7.

Contrôle des modems d'une liaison de second niveau.

Les modems d'une liaison de second niveau, par exemple, les modems 54 et 58 reliés au canal A du modem multicanal 48 peuvent être contrôlés de la façon suivante. Le modem primaire éloigné 54 attaché au canal A du modem 48 est controlé par le DTE 10 comme décrit brièvement ci-après et illustré sur la figure 8. Le DTE 10 transmet sur le canal A et en mode de données un message de commande du type commande locale ne contenant ni l'adresse du modem 46 ni celle du modem 48, mais contenant l'adresse du modem primaire éloigné 54. En conséquence aucun des modems 46 et 48 n'interceptera le message de commande qui sera reçu directement par le modem primaire éloigné 54, qui traitera la commande comme un modem attaché directement au DTE 10. Le modem 54 répondra à la commande par un message de rapport envoyé au DTE 10 à travers le canal A.

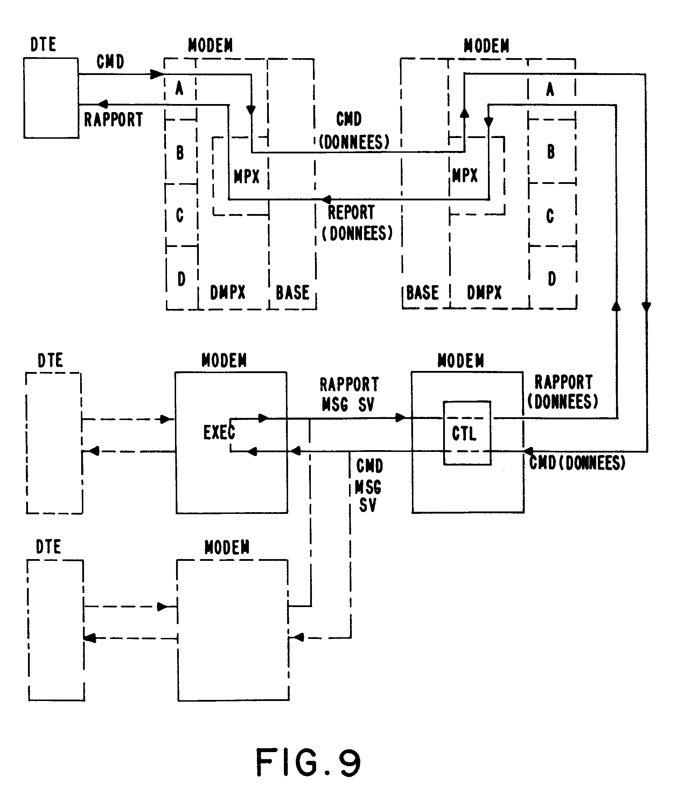

Le modem secondaire éloigné 58 sur le canal A des modems 46 et 48 est controlé par le DTE 10 comme décrit brièvement ci-après et illustré sur la figure 9. Le DTE 10 transmet sur le canal A et en mode de données un message de commande du type commande éloignée/mode supervision ne contenant ni l'adresse du modem 46 ni celle du modem 48, mais contenant l'adresse des modems éloignés 54 et 58. En conséquence aucun des modems 46 et 48 n'interceptera le message de commande qui sera reçu directement par le modem primaire éloigné 54. Celui-ci intercepte le message de commande et traite ce message comme le modem 30. Si le message de commande est valide il le reformate en un message de supervision qu'il transmet au modem secondaire éloigné en mode supervision. Au reçu d'un message de rapport du modem 58, il construit un message de rapport qu'il transmet au DTE 10 à travers le canal A.

Description détaillée

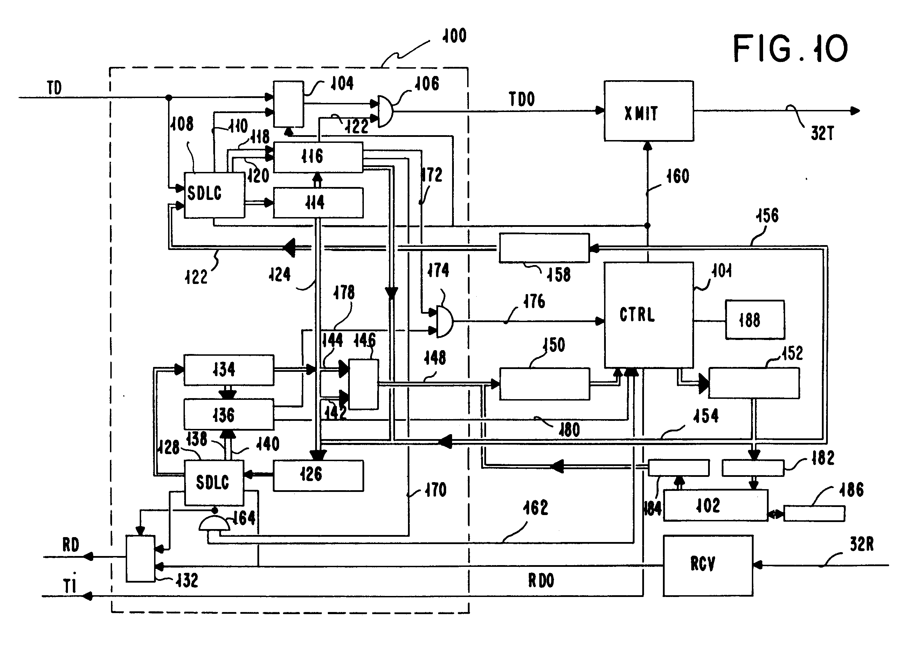

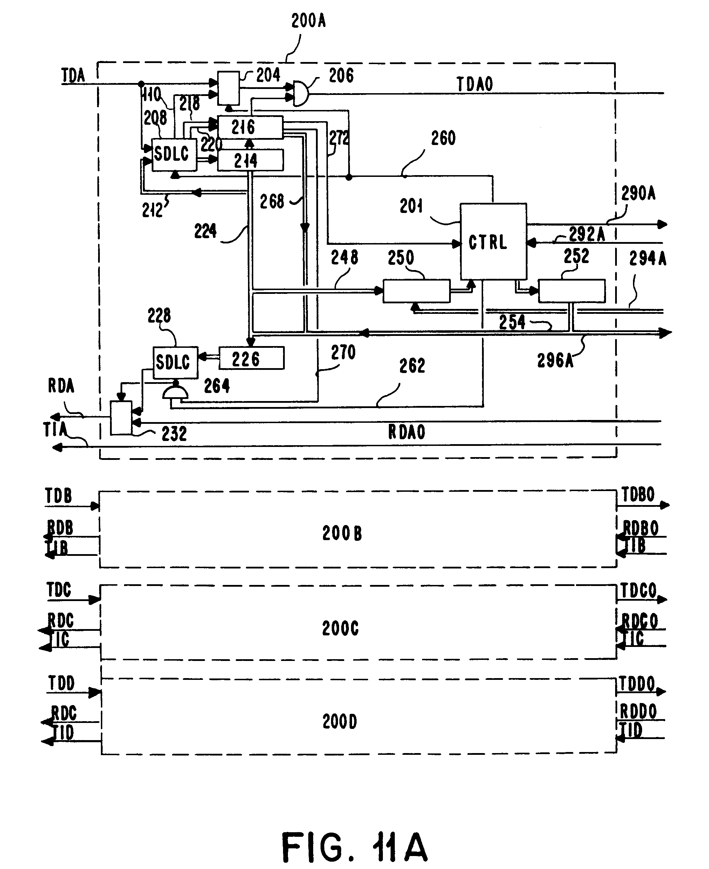

On décrira maintenant en détail l'invention au moyen d'exemples de messages de commande et de rapport, et en se référant tout d'abord à la figure 10 qui montre un exemple possible de réalisation d'un modem incorporant l'invention. Sur cette figure, seuls les éléments nécessaires à l'invention ont été représentés. Le modem illustré sur la figure 10 comprend principalement un interface de commande de test représenté par un bloc en pointillés 100, un bloc référencé XMIT qui représente l'émetteur du modem , un bloc référencé RCV qui représente le récepteur du modem, un contrôleur de test référencé 101, et un contrôleur de configuration référencé 102. L'émetteur XMIT, le récepteur RCV, et les contrôleurs 101 et 102 sont des dispositifs largement utilisés aujourd'hui dans les modems, et seuls les éléments de ces composants qui sont nécessaires à la compréhension de l'invention seront décrits. La ligne TD est appliquée à l'interface de commande de test 100 dans lequel elle est reliée à l'une des deux entrées d'un commutateur 104 dont la sortie est appliquée à une entrée d'une porte OU 106 dont la sortie est reliée à une ligne TD0 qui quitte l'interface 100 et est appliquée à l'entrée de l'émetteur XMIT. La ligne TD est aussi reliée à l'entrée série d'un adaptateur SDLC 108 qui a sa sortie série reliée par une ligne 110 à l'autre entrée du commutateur 104, son entrée parallèle reliée à un bus 112, et sa sortie parallèle reliée à un registre tampon de commande 114.

L'adaptateur SDLC 108 est un dispositif conventionnel répandu dans le commerce, et qui peut fonctionner soit en mode réception soit en mode émission. En fonctionnement en mode réception, lorsque l'adaptateur SDLC détecte un délimiteur de trame indiquant le début d'une trame SDLC, il supprime les zéros supplémentaires dans le train de bits qui suit, conformément aux règles SDLC, analyse les octets ainsi obtenus jusqu'à ce qu'il détecte un délimiteur de trame indiquant une fin de trame, puis vérifie la séquence de vérification FCS. En mode émission, l'adaptateur SDLC génère le délimiteur de début de trame, insère des zéros dans le train de bits à émettre puis génère la séquence FCS et le délimiteur de fin de trame. Le registre tampon de commande 114 est couplé à un codeur/décodeur de commande 116 qui est relié à l'adaptateur SDLC 108 par une ligne de validation 118 et une ligne de non validation 120 et a une sortie reliée à l'autre entrée de la porte OU 106 par une ligne 122. Le codeur/décodeur 116 peut être constitué par tout codeur/décodeur binaire qui active sélectivement ses sorties en fonction du contenu du registre tampon de commande 114. Ce dernier est relié par un bus 124 à un registre tampon de rapport 126 dont la sortie est reliée à l'entrée parallèle d'un adaptateur SDLC 128 identique à l'adaptateur SDLC 108. L'entrée série de l'adaptateur SDLC 128 est reliée à une ligne RD0 qui connecte la sortie du récepteur RCV à une des deux entrées d'un commutateur 132 dont la sortie est reliée à la ligne RD. La sortie parallèle de l'adaptateur SDLC 128 est appliquée à un registre tampon de réception 134, qui est couplé à un codeur/décodeur 136 semblable au codeur/décodeur 116. Le codeur/décodeur 136 est relié à l'adaptateur SDLC 128 par une ligne de validation 138 et une ligne de non validation 140. Le bus 124 et la sortie du registre tampon de réception 134 sont reliées par des bus 142 et 144 aux entrées d'une porte 146 dont la sortie est appliquée par un bus 148 au registre d'entrée 150 du contrôleur de test 101. Ce dernier est pourvu d'un registre de sortie 152 dont la sortie est reliée par des bus 154 et 156 au registre de rapport 126 et à un registre de message de supervision 158. Le contrôleur de test 101 a une sortie reliée par une ligne 160 à l'émetteur XMIT, à l'entrée de commande du commutateur 104, et à l'entrée de commande de fonctionnement en mode émission de l'adaptateur SDLC 108. Le contrôleur de test 101 a une autre sortie reliée par une ligne 162 à une des deux entrées d'une porte OU 164 dont la sortie est appliquée à l'entrée de commande de fonctionnement en mode émission de l'adaptateur SDLC 128, et à l'entrée de commande du commutateur 132. Le contrôleur de test 101 a aussi une sortie reliée à la ligne TI. Le codeur/décodeur 116 a une sortie reliée par un bus 168 au registre de rapport 126, une sortie reliée par une ligne 170 à l'autre entrée de la porte OU 164, et une sortie reliée par une ligne 172 à une des deux entrées d'une porte OU 174 dont la sortie est appliquée par une ligne 176 au contrôleur de test 101. Le codeur/décodeur 136 a une sortie reliée par une ligne 178 à l'autre entrée de la porte OU 174, et une sortie reliée par une ligne 180 au contrôleur de test 101. Le registre de sortie 152 du contrôleur de test 101 est aussi appliquée au registre d'entrée 182 du contrôleur de configuration 102 qui est pourvu d'un registre de sortie 184, et qui est couplé à un registre de configuration 186. Le contrôleur de test 101 est reliée à une horloge 188.

## Commande reçue du DTE

En fonctionnement en mode de données, et de façon connue, les bits de données transmis par le DTE auquel le modem est attaché, sont appliqués au modem par la ligne TD. Ces bits traversent le commutateur 104 puis la porte OU 106 et sont appliqués à l'émetteur XMIT du modem par transmission sur une ligne référencée 32T. De façon connue, l'émetteur XMIT convertit les bits de données en des signaux analogiques de forme appropriée à une transmission sur la ligne de transmission qu'on a référencée 32T. Les bits de données en provenance du DTE sont aussi appliqués à l'adaptateur SDLC 108 qui par défaut, fonctionne en mode réception. Lorsque l'adaptateur SDLC 108 détecte un délimiteur de début de trame, il supprime les zéros supplémentaires des bits qui suivent conformément à la procédure SDLC et les charge, octet par octet, dans le registre tampon de commande 114 dans lequel ils sont emmagasinés. Lorsque le codeur/décodeur 116 détecte un en-tête de commande H dans le train de bits qui en cours de stockage dans le registre tampon de commande 114, il attend la réception du champ d'adresse AM du message de commande , et décode l'adresse contenue dans ce champ. Si le champ AM ne contient pas l'adresse du modem, le message de commande est ignorée. Si le champ AM contient l'adresse du modem, le codeur/décodeur 116 force la sortie de la porte OU 106 à '1', ce qui force la transmission de bits '1' par l'émetteur XMIT, puis attend la validation du message de commande reçu, par l'adaptateur SDLC 108. Si le message de commande reçu est trouvé invalide par l'adaptateur SDLC 108, celui-ci applique un niveau haut sur la ligne 120, et en réponse à ce niveau, le codeur/décodeur 116 commande le transfert des champs A, N, I, AM, C, du message de commande reçu et emmagasiné dans le registre tampon 114, dans des positions prédéterminées d'un registre de rapport 126, et génère un octet de détection SB spécifiant que le message de commande reçu est invalide, et un octet L spécifiant le nombre d'octets du message de rapport, octets SB et L qu'il charge dans le registre de rapport 126. Ce dernier contient alors le message de rapport suivant:

A, N, L, K, I, AM, C, SB

L'octet K ayant une valeur constante, '50', il est pré-enregistré dans le registre de rapport 126. Le message de rapport contenu dans le registre de rapport 126 est ensuite appliqué à l'adaptateur SDLC 128 qui est mis en mode émission par le codeur/décodeur 116 au moyen d'un signal approprié X1 sur la ligne 170, et qui, à partir du contenu du registre de rapport 126 génère une trame SDLC qui est envoyée au DTE sur la ligne RD, à travers le commutateur 132 mis en position appropriée par le signal X1. Si le message de commande reçu du DTE est trouvé valide par l'adaptateur SDLC 108, celui-ci applique un niveau haut sur la ligne 118, et en réponse à ce niveau haut, le codeur/décodeur 116 envoie un signal de demande de test au contrôleur de test 101 du modem, en appliquant un niveau bas sur la ligne 172, et transfère les champs A, N, I, AM, C, du message de commande reçu et emmagasiné dans le registre tampon de commande 114 dans le registre de rapport 126, et dans le registre d'entrée 150 du contrôleur de test 101. Lorsque le contrôleur de test 101 détecte le signal de demande de test, il décode le code de commande C du message de commande emmagasiné dans le registre d'entrée 150. Le code de commande peut spécifier soit une commande locale, soit une commande éloignée, soit encore une commande locale/éloignée.

Commande locale.

Si le code de commande spécifie une commande locale, le contrôleur de test 101 commande l'exécution de la commande spécifiée par le code de commande C, et à l'issue de l'exécution de la commande, place le résultat de l'exécution de la commande, c'est à dire le contenu du champ D du message de rapport dans le registre 152. Le contrôleur de test 101 génère aussi le contenu des champs SB et L du message de rapport et les charge avec le champ D dans le registre 152. Le contenu du registre 152 est alors transféré dans le registre de rapport 126 qui contient alors le message de rapport suivant:

A, N, L, K, I, AM, C, SB, D

Ce message de rapport est ensuite appliqué à l'adaptateur SDLC 128 qui est mis en mode émission par le contrôleur de test 101 au moyen d'un signal X2 sur la ligne 162, et qui, à partir du contenu du registre de rapport 126 génère une trame SDLC qui est envoyée au DTE sur la ligne RD, à travers le commutateur 132. Si le code de commande spécifie une commande de configuration locale, le contrôleur de test transfère le message de commande contenu dans le registre 150 dans le registre d'entrée 182 du contrôleur de configuration 102 à travers son registre de sortie 152. Après exécution de la commande de configuration, le contrôleur de configuration 102 place son rapport dans son registre de sortie 184 dont le contenu est transféré au contrôleur de test 101 qui en dérive le message de rapport qui est transmis au DTE comme décrit plus haut.

Exemple de commande locale. Commande dite "auto-test local". Le message de commande qui véhicule cette commande a le format suivant:

F, A, N, H, I, AM, '11', FCS, F

où le code de commande '11' spécifie la commande "auto-test local". Le message de rapport correspondant à cette commande a le format suivant:

A, N, L, K, I, AM, '01', SB, D

où le champ D, représentatif du résultat de l'exécution de la commande comprend un octet comme indiqué ci-dessous:

bit 0     0
bit 1     Test réalisé avec succès/sans succès
bit 2     0
bit 3     Coupleur en erreur
bit 4     Dispositif de multiplexage en erreur
bit 5     0
bit 6     Modem de base en erreur
bit 7     0

Exemple de commande locale de configuration Commande dite "Lecture configuration locale". Cette commande est utilisée pour lire la configuration du modem local. Le message de commande qui véhicule cette commande a le format suivant:

F, A, N, H, I, AM, '25', CF1, ..., CFn, FCS, F

où le code de commande '25' spécifie la commande "Lecture configuration locale", et les champs CF1, ..., CFn spécifient les champs du registre de configuration devant être lus. Chacun de ces champs a une longueur de un octet, et peut contenir, par exemple, les informations suivantes:

CF =    '40' Description du produit
        '41' Description de fabrication
        '42' Vitesse de transmission
        '43' Configuration du modem de base
        '44' Paramètres de multiplexage
        '45' Seuils d'alerte
        '46' Paramètres du coupleur
        '47' Description du coupleur
        '4A' Numéro de téléphone emmagasiné
        '4B' Information client

Le message de rapport correspondant à cette commande a le format suivant:

A, N, L, K, I, AM, '25', SB, CF1,

A1, D1, ...CFn, An, Dn, FCS, F

où D1, ..., Dn représentent le contenu des champs CF1, ..., CFn, lus, et A1, ..., An sont des attributs de un octet des champs CF1, ..., CFn. Les attributs peuvent contenir les codes suivants:

0 Ce champ est applicable au modem adressé, il a été initialisé, et est valide.

1 Ce champ n'a pas été initialisé

2 Le contenu de ce champ est invalide.

3 Ce champ nécessite une option qui n'est pas installée.

4 Ce champ n'est pas applicable à ce modem.

Commande éloignée/ mode supervision

Si le code de commande spécifie une commande éloignée/mode supervision, à transmettre en mode supervision ( bit 1(M) de l'identificateur à '0'), le contrôleur de test 101 commande le transfert des champs I, AM, C, du message de commande reçu, du registre d'entrée 150 au registre de message de supervision 158, et génère l'en-tête de supervision SH qu'il charge dans ce registre à travers son registre de sortie 152. Le contrôleur de test 101 envoie un signal de mode supervision X3 à l'émetteur XMIT sur la ligne 160. En réponse au signal de mode supervision, l'émetteur XMIT arrête toute transmission sur la ligne, puis commence à transmettre une séquence de mise en route TS, le commutateur 104 interrompt toute communication entre le fil TD et l'émetteur XMIT, et l'adaptateur SDLC 108 est mis en mode émission. Le message de supervision contenu dans le registre 158 est appliqué à l'adaptateur SDLC 108 qui le transforme en une trame SDLC qui est appliquée à travers le commutateur 104 et la porte OU 106 à l'émetteur XMIT qui transmet la trame à la cadence de un bit par temps baud en utilisant, par exemple, une modulation biphase différentielle. Le contrôleur de test 101 initialise l'horloge 188 qui détermine un délai déterminé d'attente d'un message de supervision contenant le rapport du modem éloigné. Si aucun message de supervision n'est reçu dans ce délai d'attente, et si l'état du bit 5 (E) dans l'identificateur du message de commande reçu du DTE et emmagasiné dans le registre 150 n'autorise pas la répétition de la commande, le contrôleur de test 101 prépare un message de rapport indiquant "pas de rapport" qu'il charge dans le registre 152. Ce message de rapport est ensuite transmis au registre de rapport 126 puis au DTE comme décrit plus haut. Si aucun message de supervision n'est reçu dans le délai d'attente, alors que l'état du bit 5 (E) dans l'identificateur du message de commande reçu du DTE autorise la répétition de la commande, le contrôleur de test 101 commande la retransmission du message de supervision contenu dans le registre 158.

Les signaux reçus de la ligne de transmission 32R sont appliqués au récepteur RCV qui les convertit, de façon conventionnelle, en bits qui sont transmis au DTE à travers le commutateur 132 et la ligne RD. lorsque le récepteur RCV détecte dans les signaux reçus de la ligne de transmission une séquence de mise en route, il passe en mode de réception à un bit par baud à la fin de cette séquence de mise en route. Lorsque l'adaptateur SDLC 128, qui fonctionne en mode réception par défaut, détecte un délimiteur de début de trame, il supprime les zéros des bits qui suivent et les charge, octet par octet, dans le registre tampon de réception 134. Après réception d'une trame complète, le codeur/décodeur 136 décode le champ d'adresse AM du message contenu dans le registre tampon 134. Si le champ AM ne contient pas l'adresse du modem, le message reçu est ignoré. Si le champ AM contient l'adresse du modem, le codeur/décodeur 136 attend la validation du message reçu par l'adaptateur SDLC 128. Si le message reçu est trouvé invalide par l'adaptateur SDLC 128, celui-ci applique un niveau haut sur la ligne 140, et le codeur/décodeur 142 informe le contrôleur 101 de ce fait au moyen d'un signal sur la ligne 180. Le contrôleur de test 101 vérifie l'état du bit 5 (E) dans l'identificateur du message de commande emmagasiné dans le registre 150, et si son état n'autorise pas la répétition de la commande, il prépare un message de rapport indiquant "rapport erroné" qu'il charge dans le registre 152. Ce message est transféré dans le registre de rapport 126, et le message de rapport contenu dans le registre 126 est ensuite transmis au DTE comme décrit plus haut. Si l'état du bit 5 (E) autorise la répétition de la commande, le contrôleur 101 commande la retransmission du message de supervision emmagasiné dans le registre 158, en mode de supervision. Si le message reçu est reconnu valide par l'adaptateur SDLC 128, celui-ci applique un niveau haut sur la ligne 138, et le codeur/décodeur 136 décode le message contenu dans le registre de réception 134. Si le message reçu est un message de rapport, il est transféré dans le registre 150, et le contrôleur 101 en dérive les champs L, SB et DR du message de rapport qui sont chargés dans le registre 152 puis transférés dans le registre de rapport 126. Le message de rapport est le suivant:

A, N, L, K, I, AM, C, SB, DR

Ce message de rapport est ensuite appliqué à l'adaptateur SDLC 128 qui à partir du contenu du registre de rapport 126 génère une trame SDLC qui est envoyée au DTE sur la ligne RD.

Exemple de commande éloignée/mode supervision. Commande dite "auto-test éloigné". Le message de commande qui véhicule cette commande a le format suivant:

F, A, N, H, I, AM, '19', FCS, F

où le code de commande '19' spécifie la commande "auto-test éloigné". Le message de rapport correspondant à cette commande est le suivant:

A, N, L, K, I, AM, '19', DR

Le champ DR comprend un octet est est semblable au champ D du message de rapport de la commande auto-test local.

Commande locale/éloignée

Si le code de commande spécifie une commande locale/éloignée, comme par exemple une commande dite "Etat local/éloigné" qui sera décrite plus loin, le contrôleur de test 101 commande la transmission de la de la commande reçue sur la ligne de transmission au moyen d'un message de supervision et en mode de supervision, comme dans le cas d'une commande éloignée/mode supervision, mais en attendant le message de supervision contenant le rapport du modem éloigné adressé, exécute la commande locale, et place le rapport local, DL, dans le registre de rapport 126. Lorsque le message de supervision contenant le rapport du modem éloigné adressé est reçu, le contrôleur de test 101 génère les champs SB et L du message de rapport qu'il charge avec le rapport du modem éloigné adressé, DR, dans le registre de rapport 126. Si le modem éloigné adressé ne répond pas dans le délai d'attente qui lui est alloué, le champ DR contiendra un octet zéro. Le message de rapport contenu dans le registre 126 a alors le format suivant:

F, A, N, L, K, I, AM, C, SB, DL, DR, FCS, F

Ce message de rapport est ensuite transmis au DTE à travers l'adaptateur SDLC 128, le commutateur 132, et la ligne RD. Exemple de commande locale/éloignée Commande dite "Etat local/éloigné". Le message de commande qui véhicule cette commande a le format suivant:

F, A, N, H, I, AM, '1A', FCS, F

où le code de commande '1A' spécifie la commande. Cette commande est utilisée pour lire l'état des paramètres de qualité de ligne côté émission et côté réception. Le message de rapport correspondant à cette commande a le format suivant:

F, A, N, L, K, I, AM, '1A', SB, DL, DR, FCS, F.

Le champ DL qui représente le rapport du modem local a une longueur de quatre octets qui ont la signification suivante:

| Octet 0 : | bits 0-5 | Compte des erreurs de réception |
| | bit 6 | Réinitialisation du modem |
| | bit 7 | Perte de porteuse |
| Octet 1 : | bits 0-3 | Qualité des données |
| | bit 4 | Détection modem éloigné non en service |
| | bit 5 | Détection panne d'alimentation du modem éloigné |
| | bit 6 | Repli sur réseau commuté |
| | bit 7 | Détection blocage (streaming) du modem éloigné |
| Octet 2 : | bit 0 | Niveau de réception hors limites |
| | bit 1 | Qualité des données hors limites |
| | bits 2-7 | Niveau de réception |
| Octet 3 : | bit 0 | Mode de contrôle de vitesse |
| | bit 1 | Contact fermé |
| | bit 2 | Modem de second niveau attaché |
| | bit 3 | Erreur de réception hors limites |
| | bit 4 | Erreur de réception non significative |
| | bit 5 | Qualité des données non significative |
| | bit 6 | Intervention nécessaire sur configuration |
| | bit 7 | Perte d'information non vitale |

Le champ DR qui représente le rapport du modem éloigné a une longueur de quatre octets qui ont la signification suivante:

| Octet 0 : | bits 0-5 | Compte des erreurs de réception |
| | bit 6 | Réinitialisation du modem |
| | bit 7 | Perte de porteuse |
| Octet 1 : | bits 0-3 | Qualité des données |
| | bit 4 | 0 |
| | bit 5 | 0 |
| | bit 6 | Repli sur réseau commuté |
| | bit 7 | Détection blocage (streaming) du modem éloigné |
| Octet 2 : | bit 0 | Niveau de réception hors limites |
| | bit 1 | Qualité des données hors limites |
| | bits 2-7 | Niveau de réception |
| Octet 3 : | bit 0 | Mode de contrôle de vitesse |
| | bit 1 | Contact fermé |
| | bit 2 | Modem de second niveau attaché |
| | bit 3 | Erreur de réception hors limites |
| | bit 4 | Erreur de réception non significative |
| | bit 5 | Qualité des données non significative |
| | bits 6-7 | 00 |

Commande reçue de la ligne de transmission

Si le message reçu de la ligne est un message de commande, le codeur/décodeur 136 envoie un signal de demande de test au contrôleur de test 101, sur la ligne 178, et le message de commande reçu est transféré dans le registre d'entrée 150 et dans le registre de message de supervision 158. Lorsque le contrôleur 101 détecte le signal de demande de test, il lit le contenu du registre 150, active la ligne TI pour indiquer au DTE auquel il est attaché qu'il entre en test, et exécute la commande contenue dans ce registre. Si la commande est une commande de configuration, elle est transférée au contrôleur de configuration 102 qui retourne son rapport au contrôleur de test 101. A l'issue de l'exécution de la commande, le contrôleur de test 101 place le résultat de l'exécution de la commande, c'est à dire le

17

EP 0 200 842 B1

contenu du champ DR du message de rapport dans le registre 152. Le contenu du registre 152 est transféré dans le registre 158, et le contenu de ce registre est ensuite transmis sur la ligne de transmission en mode supervision à travers l'adaptateur SDLC 108 , le commutateur 104 la porte 106 et l'émetteur XMIT.

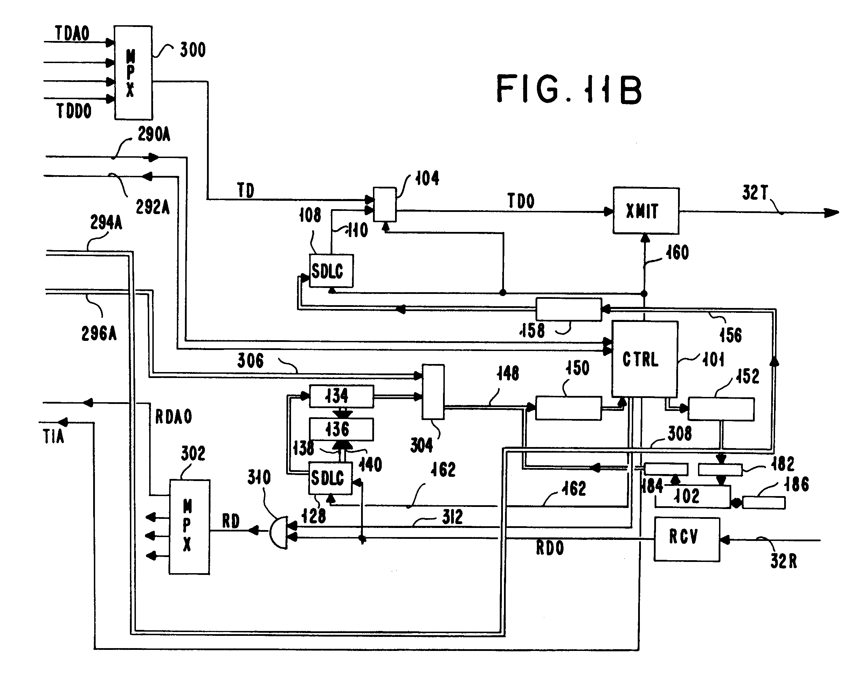

La figure 11 illustre un exemple de réalisation d'un modem multicanal incorporant l'invention, et dans lequel seuls les éléments nécessaires à l'invention ont été représentés. Le modem représenté sur la figure est un modem à quatre canaux, qui comprend quatre canaux référencés A-D, un dispositif de multiplexage/démultiplexage DMPX constitué par des multiplexeurs/démultiplexeurs MPX, et un modem de base. Chacun des canaux A-D comprend un interface de commande de test de canal référencé 200A-200D, respectivement, et dans un souci de simplification, seul l'interface 200A a été représenté sur la figure. La ligne TDA est appliquée à l'interface de commande de test 200A dans lequel elle est reliée à l'une des deux entrées d'un commutateur 204 dont la sortie est appliquée à une entrée d'une porte OU 206 dont la sortie est reliée à une ligne TDA0 qui quitte l'interface 200A et est appliquée au modem de base. La ligne TDA est aussi reliée à l'entrée série d'un adaptateur SDLC 208 qui a son entrée parallèle reliée à un bus 212, sa sortie série reliée à l'autre entrée du commutateur 204, et sa sortie parallèle reliée à un registre tampon de commande 214. L'adaptateur SDLC 208 est semblable aux adaptateurs SDLC de la figure 10. Le registre tampon de commande 214 est couplé à un codeur/décodeur 216, qui est relié à l'adaptateur SDLC 208 par une ligne de validation 218 et une ligne de non validation 220, et qui a une sortie reliée à l'autre entrée de la porte OU 206 par une ligne 222. Le registre tampon de commande 214 est relié par un bus 224 à un registre tampon de rapport 226 dont la sortie est reliée à l'entrée parallèle d'un adaptateur SDLC 228 identique à l'adaptateur SDLC 208. La sortie série de l'adaptateur SDLC 228 est reliée à une des deux entrées d'un commutateur 232 dont l'autre entrée est reliée à une ligne RDA0 en provenance du modem de base, et dont la sortie est reliée à la ligne RDA à travers une porte ET 233. Le bus 224 est relié par un bus 248 au registre d'entrée 250 du contrôleur de test du canal 201. Ce contrôleur est pourvu d'un registre de sortie 252 dont la sortie est reliée par un bus 254 au registre de rapport 226. Le contrôleur de test 201 a une sortie reliée par une ligne 260 à l'entrée de commande du commutateur 204, et à l'entrée de commande de fonctionnement en mode émission de l'adaptateur SDLC 208. Le contrôleur de test 201 a une autre sortie reliée par une ligne 262 et une porte OU 264 à l'entrée de commande de fonctionnement en mode émission de l'adaptateur SDLC 228, et à l'entrée de commande du commutateur 232. Le codeur/décodeur 216 a une sortie reliée par un bus 268 au registre de rapport 226, une sortie reliée par une ligne 270 à l'autre entrée de la porte OU 264, et une sortie reliée par une ligne 272 au contrôleur de test 201. Ce dernier est relié au modem de base par une ligne de demande de test modem 290A, et une ligne de demande de test canal 292A. Le registre d'entrée 250 et le registre de sortie 252 sont reliés respectivement au modem de base par des bus 294A et 296A. La ligne TDA0 et les lignes correspondantes TDB0-TDD0 des interfaces 200B-200D sont appliquées à un multiplexeur 300 dont la sortie est reliée à la ligne TD du modem de base. De même les lignes RDA0 et les lignes correspondantes RDB0-RDD0 des interfaces 200B-200D sont reliées aux sorties d'un démultiplexeur 302 dont l'entrée est reliée à la ligne RD du modem de base. Le modem de base a de nombreux éléments communs avec le modem de la figure 10, et dans un souci de clarté, les éléments communs aux figures 10 et 11 portent les mêmes références. La ligne TD est reliée à l'une des deux entrées d'un commutateur 104 dont la sortie est reliée à une ligne TD0 qui est appliquée à l'entrée de l'émetteur XMIT du modem de base. La sortie du récepteur RCV du modem de base est reliée par la ligne RD0 à l'entrée série d'un adaptateur SDLC 128 dont la sortie parallèle est appliquée à un registre tampon de réception 134. Ce dernier est couplé à un codeur/décodeur 136 qui est relié à l'adaptateur SDLC 128 par une ligne de validation 138 et une ligne de non validation 140. La sortie du registre tampon 134 est reliée par un bus 144 à l'entrée d'une porte 304 dont la sortie est appliquée au registre d'entrée 150 du contrôleur de test 101. L'autre entrée de la porte 304 est reliée par un bus 306 au bus 296A et aux bus correspondants 296B-D des interfaces 200B-200D. Le contrôleur de test 101 est pourvu d'un registre de sortie 152 dont la sortie est reliée par un bus 156 à un registre de message de supervision 158, et par un bus 308 au bus 294A et aux bus correspondants 294B-294D des interfaces 200B-200D. La sortie du registre de message de supervision est reliée par un bus 112 à l'entrée parallèle d'un adaptateur SDLC 108 qui a sa sortie série reliée à l'autre entrée du commutateur 104. Le contrôleur de test 101 a une sortie reliée par une ligne 160 à l'émetteur XMIT, à l'entrée de commande du commutateur 104, et à l'entrée de commande de fonctionnement en mode émission de l'adaptateur SDLC 108. Le contrôleur de test 101 a une autre sortie reliée par une ligne 162 à l'entrée de commande de fonctionnement en mode émission de l'adaptateur SDLC 128. Le contrôleur de test 101 est relié aux lignes 290A et 292A, et aux lignes correspondantes 290B-290D et 292B-292D des interfaces 200B-200D. Le contrôleur de test est aussi relié aux lignes TIA-TID. La ligne RD0 est reliée à une des deux entrées d'une porte OU 310 dont l'autre entrée est reliée par une ligne 312 au contrôleur de test 101, et dont la sortie est reliée à la ligne RD. Le registre de sortie 152 du contrôleur de test 101 est aussi appliquée au registre

18

d'entrée 182 d'un contrôleur de configuration 102 dont le registre de sortie 184 est relié au registre d'entrée 150 du contrôleur de test 101, et qui est couplé à un registre de configuration 186. Le contrôleur de test 101 est reliée à une horloge 188.

Commande reçue du DTE

En fonctionnement en mode de données, et de façon connue, les bits de données transmis sur le canal A par le DTE auquel le modem est attaché, sont appliqués au modem par la ligne TDA. Ces bits traversent le commutateur 204 puis la porte 206 et sont appliqués par la ligne TDA0 au multiplexeur 300 dans lequel ils sont multiplexés avec les bits sur les canaux B-D en un train de bits composite qui est applique à l'émetteur XMIT du modem de base pour transmission sur la ligne de transmission. Les bits de données sur la ligne TDA sont aussi appliqués à l'adaptateur SDLC 208 qui par défaut, fonctionne en mode réception. Lorsque l'adaptateur SDLC 208 détecte un délimiteur de début de trame, il supprime les zéros supplémentaires des bits qui suivent et les charge, octet par octet, dans le registre tampon de commande 214 dans lequel ils sont emmagasinés. Lorsque le codeur/décodeur 216 détecte un en-tête de commande H dans le train de bits qui en cours de stockage dans le registre tampon 214, il attend la réception du champ d'adresse AM du message de commande , et décode l'adresse contenue dans ce champ. Si le champ AM ne contient pas l'adresse du modem, le message de commande est ignoré. Si le champ AM contient l'adresse du modem, le codeur/décodeur 216 force la sortie de la porte OU 206 à '1', ce qui force la transmission de bits '1' sur le canal A, puis attend la validation du message de commande reçu, par l'adaptateur SDLC 208. Si le message de commande reçu est trouvé invalide par l'adaptateur SDLC 208, celui-ci applique un niveau haut sur la ligne 220, et en réponse à ce niveau, le codeur/décodeur 216 commande le transfert des champs A, N, I, AM, C, du message de commande reçu et emmagasiné dans le registre tampon 214, dans des positions prédéterminées du registre de rapport 226, et génère un octet de détection SB spécifiant que le message de commande reçu est invalide, et un octet L spécifiant le nombre d'octets du message de rapport, octets SB et L qu'il charge dans le registre de rapport 226. Le message de rapport contenu dans le registre de rapport 226 est ensuite appliqué à l'adaptateur SDLC 228 qui est mis en mode émission par le codeur/décodeur 216 au moyen d'un signal approprié sur la ligne 270, et qui, à partir du contenu du registre de rapport 226 génère une trame SDLC qui est envoyée au DTE sur la ligne RDA, à travers le commutateur 232 . Si le message de commande reçu du DTE est trouvé valide par l'adaptateur SDLC 208, celui-ci applique un niveau haut sur la ligne 218, et en réponse à ce niveau haut, le codeur/décodeur 216 envoie un signal de demande de test au contrôleur de test 201 du canal, sur la ligne 172, et transfère les champs A, N, I, AM, C, du message de commande reçu et emmagasiné dans le registre tampon 214 dans le registre de rapport 226, et dans le registre d'entrée 150 du contrôleur de test 101. Lorsque le contrôleur de test 101 détecte le signal de demande de test, il décode le code de commande C du message de commande emmagasiné dans le registre d'entrée 150. Le code de commande peut spécifier soit une commande locale, soit une commande éloignée, soit une commande locale/éloignée.

Commande locale.

Si le code de commande spécifie une commande locale, deux cas peuvent se présenter. La commande peut impliquer ou non le modem de base. Si la commande n'implique pas le modem de base, le contrôleur de test 201 commande l'exécution de la commande spécifiée par le code de commande C, et à l'issue de l'exécution de la commande, place le résultat de l'exécution de la commande, c'est à dire le contenu du champ D du message de rapport dans le registre 252. Le contrôleur de test 201 génère aussi le contenu des champs SB et L du message de rapport et les charge avec le champ D dans le registre 252. Le contenu du registre 252 est alors transféré dans le registre 226 Le message de rapport contenu dans le registre de rapport 226 est ensuite appliqué à l'adaptateur SDLC 228 qui est mis en mode émission par le contrôleur de test 101 au moyen d'un signal approprié sur la ligne 262, et qui, à partir du contenu du registre de rapport 226 génère une trame SDLC qui est envoyée au DTE sur la ligne RDA, à travers le commutateur 232, et la porte OU 233. Si la commande implique le modem de base, le contrôleur de test 201 active un signal de demande de test sur la ligne 290A, et transfère la commande au contrôleur de test 101 du modem de base à travers son registre de sortie 252, le bus 296A, le bus 306, la porte 304, et le registre d'entrée 150. Le contrôleur de test 101 commande l'exécution de la commande spécifiée par le code de commande C, et à l'issue de l'exécution de la commande, inscrit le résultat de l'exécution de la commande, c'est à dire le contenu du champ D du message de rapport dans le registre de sortie 152. Le contrôleur de test 101 génère aussi le contenu des champs SB et L du message de rapport et les charge avec le champ D dans le registre 152. Le contenu du registre 152 est alors transféré au contrôleur de test 201 à travers le bus 308 et le bus 294A pour être chargé dans le registre d'entrée 250 du contrôleur de test 201. Celui-ci reconnait le rapport du modem de base et le transfère dans le registre de rapport 226. Le message de rapport contenu dans le registre de rapport 226 est ensuite appliqué à l'adaptateur SDLC 228 qui est mis en mode émission par le contrôleur de test 201 au moyen d'un signal approprié sur la ligne 262, et qui, à partir du contenu du registre de rapport 226 génère une trame SDLC qui est envoyée au DTE sur la ligne RDA, à travers le commutateur 232, et la porte OU 233.

Commande éloignée/ mode supervision

Si le code de commande spécifie une commande éloignée/mode supervision, à transmettre en mode supervision ( bit 1(M) de l'identificateur à '0'), le contrôleur 201 transfère la commande reçue du DTE au contrôleur de test 101 du modem de base, comme décrit plus haut. Lorsque celui-ci détecte qu'il s'agit d'une commande éloignée à transmettre en mode supervision, il commande le transfert du message de commande reçu, du registre d'entrée 150 au registre de message de supervision 158, et génère l'en-tête de supervision SH et l'adresse du canal CH qu'il charge dans ce registre à travers son registre de sortie 152. Le contrôleur de test 101 envoie un signal de mode supervision à l'émetteur XMIT sur la ligne 160. En réponse au signal de mode supervision, l'émetteur XMIT arrête toute transmission sur la ligne, puis commence à transmettre une séquence de mise en route TS, le commutateur 104 interrompt toute communication entre le fil TD et l'émetteur XMIT, et l'adaptateur SDLC 108 est mis en mode émission. Le message de supervision contenu dans le registre 158 est appliqué à l'adaptateur SDLC 108 qui le transforme en une trame SDLC qui est appliquée à travers le commutateur 104 à l'émetteur XMIT qui transmet la trame à la cadence de un bit par temps baud. Le contrôleur de test 101 initialise l'horloge 188 qui détermine un délai déterminé d'attente d'un message de rapport en provenance du modem éloigné, et traite une absence de message de rapport comme décrit plus haut. lorsque le modem de base reçoit un message de rapport valide du modem éloigné, le codeur/décodeur 136 décode le message contenu dans le registre de réception 134. Si le message reçu est un message de rapport, il est transféré dans le registre 150, et le contrôleur 101 en dérive les champs L, SB et DR du message de rapport qui sont chargés dans le registre 152 puis transférés dans le registre de rapport 226 du canal. Le message de de rapport est ensuite appliqué à l'adaptateur SDLC 228 qui à partir du contenu du registre de rapport 226 génère une trame SDLC qui est envoyée au DTE sur la ligne RDA.

Commande éloignée/ mode de données

Si le code de commande spécifie une commande éloignée/mode de données, ( bit 1(M) de l'identificateur à '1'), le contrôleur 201 commande la transmission de la commande reçue et emmagasinée dans le registre tampon 214 sur la ligne TDA à travers l'adaptateur SDLC 208, le commutateur 204, et la porte OU 206.

Commande reçue de la ligne de transmission

Les signaux reçus de la ligne de transmission sont appliqués au récepteur RCV qui les convertit, de façon conventionnelle, en un train de bits qui est démultiplexé par le démultiplexeur 302 pour transmission au DTE sur les lignes RDA-RDD. Lorsque le récepteur RCV détecte dans les signaux reçus de la ligne de transmission une séquence de mise en route, il passe en mode de réception à un bit par baud à la fin de cette séquence de mise en route. Lorsque l'adaptateur SDLC 128, qui fonctionne en mode réception par défaut, détecte un délimiteur de début de trame, il supprime les zéros des bits qui suivent et les charge, octet par octet, dans le registre tampon de réception 134. Après réception d'une trame complète, le codeur/décodeur 136 décode le champ d'adresse AM du message contenu dans le registre tampon 134. Si le champ AM ne contient pas l'adresse du modem, le message reçu est ignoré. Si le champ AM contient l'adresse du modem, le codeur/décodeur 136 attend la validation du message reçu par l'adaptateur SDLC 128. Si le message reçu est trouvé invalide par l'adaptateur SDLC 128, le contrôleur de test 101 construit les différents messages de rapport comme vu plus haut. Si le message reçu est reconnu valide par l'adaptateur SDLC 128, le codeur/décodeur 136 transfère le message reçu au contrôleur de test 101. Si le message est un message de commande, le contrôleur de test vérifie s'il s'agit d'une commande n'impliquant pas de canal, ou si la commande implique un canal (présence d'une adresse CH). Si la commande n'implique que le modem de base, le contrôleur la traite comme décrit plus haut. Si la commande implique un canal, par exemple le canal A, il active la ligne de demande de test 292A et

EP 0 200 842 B1

transfère la commande au contrôleur de test du canal 201. Celui-ci exécute la commande, et construit un message de rapport qu'il transmet au contrôleur de test 101. Celui-ci en dérive un message de supervision qu'il transmet sur la ligne de transmission en mode supervision, à travers l'adaptateur SDLC 108 et l'émetteur XMIT.

Cas d'une commande de configuration de multiplexage

Lorsque que le DTE désire commander la configuration de multiplexage, c'est à dire par exemple la répartition des canaux actifs et/ou leur vitesse, il transmet au modem multicanal auquel il est attaché, sur l'un quelconque des canaux une commande dite "Ecriture configuration locale" comme décrite ci-après. Le message de commande qui véhicule cette commande a le format suivant:

F, A, N, H, I, AM, '26', CF, D, FCS, F

où le code de commande '26' spécifie la commande "Ecriture configuration locale", et le champ CF contient un octet dont la valeur est égale à '44' (voir commande "Lecture configuration locale" plus haut), et D est un champ de 3 octets comme indiqué ci-dessous:

Octet 0

bits 0-3     0000
bits 4-7     Numéro de l'ensemble d'horloge externe à activer.

Octet 1

Numéro de la configuration de multiplexage à utiliser à la vitesse nominale.

Octet 2

Numéro de la configuration de multiplexage à utiliser à la vitesse de repli.

Lorsqu'un canal détecte cette commande, il la transfère au contrôleur de test 101 du modem de base, qui, l'identifiant la transfère au contrôleur de configuration 102, ou plus exactement à son registre d'entrée 182. Le contrôleur de configuration compare le contenu du champ D avec le contenu du registre de configuration 186 qui spécifie le numéro des configurations de multiplexage en cours. Si les contenus des registres 182 et 186 concordent, aucune action ne se produit. Si le contenu du registre d'entrée 182 diffère de celui du registre de configuration, c'est à dire qu'un changement de configuration est demandé, le contrôleur de configuration 102 en informe le contrôleur de test 101 qui transmet la commande reçue au modem éloigné au moyen d'un message de supervision transmis en mode supervision, et attend en retour pendant un délai d'attente prédéterminé le même message de supervision en provenance du modem éloigné à titre d'accusé de réception. Si le modem ne reçoit pas d'accusé de réception pendant le délai d'attente, il retransmet ou non le message reçu du DTE comme décrit plus haut. S'il reçoit l'accusé de réception du modem éloigné pendant le délai d'attente,il passe à la nouvelle configuration après un délai de réaction prédéterminé.

**Revendications**

1.  Modem de commande local pour contrôler un réseau de modems qui comprend un équipement terminal de données (10), connecté audit modem de commande (14, 30, 46) par une voie de transmission de données (TD) et une voie de réception de données (RD) sur lesquelles l'équipement terminal de données transmet et reçoit des messages de données et de commande, respectivement, et, un modem de éloigné (16, 34, 36, 38, 48) relié audit modem de commande par un milieu de transmission (18, 32, 50), chacun desdits modems fonctionnant en mode de données à une cadence de transmission de n bits par baud, n étant un nombre entier positif supérieur à un, ledit modem de commande comprenant un processeur ayant des moyens pour effectuer la surveillance permanente du contenu des messages reçus de l'équipement terminal de données sur la voie de transmission de données (TD), de façon à détecter la transmission par l'équipement terminal de données désirant initier un contrôle du réseau de modems, sur la voie de transmission de données (TD), d'un message de commande comprenant un premier moyen d'identification (H), un moyen d'adressage (AM), et un moyen de commande (C);
    ledit modem de commande étant caractérisé en ce que ledit processeur comprend:

21

EP 0 200 842 B1

un premier moyen d'emmagasinage du message de commande reçu sur ladite voie de transmission de données (TD) lorsque ledit modem de commande a détecté dans ce message la présence du premier moyen d'identification (H) et celle de sa propre adresse dans le moyen d'adressage (AM),

un moyen de génération, à partir dudit message de commande, d'un premier message de supervision comprenant un second moyen d'identification (SH), et le moyen d'adressage (AM) et le moyen de commande (C) qui étaient contenus dans ledit message de commande, lorsque ce dernier spécifie une commande pour ledit modem éloigné, et

un premier moyen de transmission sur le milieu de transmission d'une séquence de mise en route, puis dudit premier message de supervision, ledit premier message de supervision étant transmis à la cadence de un bit par baud quelle que soit la cadence des données échangées par lesdits modem de commande et modem éloigné.

2. Modem de commande selon la revendication 1, pour contrôler un réseau de modems dans lequel ledit modem éloigné (16, 34, 36, 38, 48) comprend un processeur ayant:

un moyen de réception de la séquence de mise en route transmise par ledit modem de commande,

un moyen de commande pour le passage à une réception à la cadence de un bit par baud à la fin de la réception de la séquence de mise en route, et la surveillance du contenu des messages reçus dudit modem de commande après la séquence d'initialisation, à la cadence de un bit par baud,

un moyen d'emmagasinage du premier message de supervision reçu du milieu de transmission lorsque ledit moyen de commande a détecté dans ce message la présence du second moyen d'identification (SH) et l'adresse dudit modem de commande dans le moyen d'adressage (AM),

un moyen d'exécution de la commande spécifiée par le moyen de commande (C) contenu dans le premier message de supervision reçu,

un moyen d'élaboration d'un rapport contenant le résultat de l'exécution de la commande,

un moyen de génération d'un second message de supervision comprenant le contenu du premier message de supervision reçu auquel est adjoint le rapport, et

un moyen de transmission sur le milieu de transmission d'une séquence de mise en route et du second message de supervision, ledit second message de supervision étant transmis à la cadende de un bit par baud quelle que soit la cadence des données échangées par lesdits modem de commande et modem éloigné.

3. Modem de commande selon la revendication 2 dans lequel ledit processeur comprend:

un moyen de réception de la séquence de mise en route transmise par ledit modem éloigné (16, 34, 36, 38, 48),

un moyen de commande pour le passage à une réception à la cadence de un bit par baud à la fin de la réception de la séquence de mise en route transmise par ledit modem éloigné et la surveillance du contenu des messages reçus dudit modem, à la cadence de un bit par baud,

un second moyen d'emmagasinage du second message de supervision reçu du milieu de transmission lorsque ledit modem de commande a détecté dans ce message la présence dudit second moyen d'identification (SH) et celle de sa propre adresse dans le moyen d'adressage (AM),

un moyen de détection du rapport dudit modem éloigné contenu dans le second message de supervision reçu,

un moyen d'élaboration d'un message de rapport contenant le résultat de l'exécution de la commande à partir du second message de supervision reçu dudit modem éloigné, et

un second moyen de transmission du message de rapport par ledit modem de commande à l'équipement terminal de données sur la voie de réception de données (RD) de l'équipement terminal de données.

4. Modem de commande selon la revendication 1, pour contrôler un réseau de modems dans lequel, lorsque le message de commande reçu par ledit modem de commande et en provenance de l'équipement terminal de données est en erreur,

ledit moyen d'élaboration dudit modem de commande élabore un message de rapport spécifiant les erreurs contenues dans le message de commande reçu, et

ledit second moyen de tranmission dudit modem de commande transmet un message de rapport à l'équipement terminal de données sur la voie de réception de données (RD) de l'équipement terminal de données

5. Modem de commande selon la revendication 3, pour contrôler un réseau de modems dans lequel, si aucun second message de supervision contenant un rapport dudit modem et en provenance de ce dernier n'est reçu après un délai d'attente prédéterminé,

ledit moyen d'élaboration dudit modem de commande élabore un message de rapport spécifiant qu'aucun rapport dudit modem éloigné n'a été reçu, et

ledit second moyen de transmission dudit modem de commande transmet un message de rapport à l'équipement terminal de données sur la voie de réception de données (RD) de l'équipement terminal de données.

6. Modem de commande local pour contrôler un réseau de modems qui comprend un équipement terminal de données (10), connecté audit modem de commande (46) et un modem éloigné (48) relié audit modem de commande par un milieu de transmission (50), chacun desdits modems comprenant plusieurs canaux (A-D) et un modem de base (46B, 48B) et échangeant entre eux des bits de données à une cadence de transmission de n bits par baud, n étant un nombre entier positif supérieur à un, l'équipement terminal de données étant relié à chacun des canaux dudit modem de commande par une voie de transmission de données (TDA, TDB, TDC, TDD) et une voie de réception de données (RDA, RDB, RDC, RDD) sur lesquelles l'équipement terminal de données transmet et reçoit des messages de données et de commande, respectivement, ledit modem de commande comprenant un processeur ayant des moyens pour effectuer la surveillance permanente par ledit modem de commande du contenu des messages reçus de l'équipement terminal de données sur chacune des voies de transmission de données (TDA, TDB, TDC, TDD) reliées à l'équipement terminal de données, de façon à détecter la transmission par l'équipement terminal de données désirant initier un contrôle du réseau de modems, sur l'une des voies de transmission de données (TDA, TDB, TDC, TDD), d'un message de commande comprenant un premier moyen d'identification (H), un premier moyen d'adressage (AM), un indicateur de mode de transmission (M), et un moyen de commande (C),

ledit modem de commande étant caractérisé en ce que ledit processeur comprend :

un premier moyen d'emmagasinage du message de commande reçu sur une des voies de transmission (TDA, TDB, TDC, TDD) lorsque la présence de premier moyen d'identification (H) et celle de l'adresse dudit modem de commande ont été détectées dans ce message,

un moyen de génération, à partir du message de commande reçu, d'un premier message de supervision comprenant un second moyen d'identification (SH), un second moyen d'adressage (CH) identifiant celui des canaux dudit modem de commande qui a reçu le message de commande, et le premier moyen d'adressage (AM), l'indicateur de mode transmission (M) et le moyen de commande (C) qui étaient contenus dans le message de commande reçu, lorsque l'indicateur de mode de transmission spécifie un premier mode de transmission, et le moyen de commande spécifie une commande pour ledit modem éloigné, et

un premier moyen de transmission sur le milieu de transmission d'une séquence de mise en route puis du premier message de supervision, ledit premier message de supervision étant transmis à la cadence de un bit par baud quelle que soit la cadence des données échangées par lesdits modem de commande et modem éloigné.

7. Modem de commande selon la revendication 6 pour contrôler un réseau de modems dans lequel ledit modem éloigné (48) comprend un processeur ayant un moyen de réception de la séquence de mise en route transmise par ledit modem de commande (46),

un moyen de commande pour le passage à une réception à la cadence de un bit par baud à la fin de la réception de la séquence de mise en route, et la surveillance du contenu des messages reçus dudit modem de commande après la séquence d'initialisation, à la cadence de un bit par baud,

un moyen d'emmagasinage du premier message de supervision reçu du milieu de transmission lorsque ledit modem éloigné a détecté dans ce message la présence du second moyen d'identification (SH) et celle de sa propre adresse dans le premier moyen d'adressage (AM),

un moyen d'exécution de la commande spécifiée par le moyen de commande contenu dans le premier message de supervision reçu,

un moyen d'élaboration d'un rapport contenant le résultat de l'exécution de la commande,

un moyen de génération d'un second message de supervision comprenant le contenu du premier message de supervision reçu auquel est adjoint le rapport, et

un moyen de transmission successive sur le milieu de transmission d'une séquence de mise en route, puis du second message de supervision, ledit second message de supervision étant transmis à la cadence de un bit par baud quelle que soit la cadence des données échangées par lesdits modem de commande et modem éloigné.

**8.** Modem de commande (46) selon la revendication 7, dans lequel ledit processeur comprend :

un moyen de réception de la séquence de mise en route transmise par ledit modem éloigné (48),

un moyen de commande pour le passage à une réception à la cadence de un bit par baud à la fin de la réception de la séquence de mise en route, et la surveillance du contenu des messages reçus dudit modem éloigné après la séquence d'initialisation, à la cadence de un bit par baud,

un second moyen d'emmagasinage du second message de supervision reçu du milieu de transmission lorsque ledit modem de commande a détecté dans ce message la présence du second moyen d'identification (SH) et celle de sa propre adresse,

un moyen de détection du rapport dudit modem éloigné contenu dans le second message de supervision reçu,

un moyen d'élaboration d'un message de rapport contenant le résultat de l'exécution de la commande à partir du second message de supervision reçu dudit modem éloigné, et

un second moyen de transmission du message de rapport par ledit modem de commande sur la voie de réception de données (RDA, RDB, RDC, RDD) du canal qui a reçu le message de commande de l'équipement terminal de données.

**9.** Modem de commande selon la revendication 6, pour contrôler un réseau de modems dans lequel, lorsque l'indicateur de mode de transmission contenu dans le message de commande reçu par ledit modem de commande (46) à partir de l'équipement terminal de données spécifie un second mode de transmission, l'adresse du canal qui a reçu le message de commande est adjointe au message de commande reçu, et le message de commande en résultant est transmis sur le milieu de transmission en mode de données.

**Claims**

**1.** Local control modem for monitoring a network of modems which comprises a data terminal equipment (10), connected to the said control modem (14, 30, 46) by a data transmission path (TD) and a data reception path (RD) on which the data terminal equipment transmits and receives data and control messages respectively, and, a remote modem (16, 34, 36, 38, 48) linked to the said control modem by a transmission medium (18, 32, 50), each of the said modems operating in data mode with a transmission rate of n bits per baud, n being a positive integer greater than one, the said control modem comprising a processor having means for performing permanent checking of the contents of the messages received from the data terminal equipment on the data transmission path (TD), so as to detect the transmission by the data terminal equipment desiring to initiate a monitoring of the network of modems, on the data transmission path (TD), of a control message comprising a first means of identification (H), a means of addressing (AM), and a means of control (C);

the said control modem being characterised in that the said processor comprises: a first means of storage of the control message received on the said data transmission path (TD) when the said control modem has detected in this message the presence of the first means of identification (H) and that of its own address in the means of addressing (AM),

a means of generation, on the basis of the said control message, of a first supervision message comprising a second means of identification (SH), and the means of addressing (AM) and the means of control (C) which were contained in the said control message, when the latter specifies a control signal for the said remote modem, and

a first means of transmission on the transmission medium of a start-up sequence, then of the said first supervision message, the said first supervision message being transmitted at the rate of one bit per baud whatever the rate of the data exchanged by the said control modem and remote modem.

**2.** Control modem according to Claim 1, for monitoring a network of modems in which the said remote modem (16, 34, 36, 38, 48) comprises a processor having:

a means of reception of the start-up sequence transmitted by the said control modem,

a means of control for passing to reception at the rate of one bit per baud at the end of the reception of the start-up sequence, and the checking of the contents of the messages received from the said control modem after the initialisation sequence, at the rate of one bit per baud,

a means of storage of the first supervision message received from the transmission medium when the said means of control has detected in this message the presence of the second means of identification (SH) and the address of the said control modem in the means of addressing (AM),

a means of execution of the control signal specified by the means of control (C) contained in the first supervision message received,

a means of preparation of a report containing the result of the execution of the control signal,

a means of generation of a second supervision message comprising the contents of the first supervision message received to which the report is added, and

a means of transmission on the transmission medium of a start-up sequence and of the second supervision message, the said second supervision message being transmitted at the rate of one bit per baud whatever the rate of the data exchanged by the said control modem and remote modem.

3.  Control modem according to Claim 2 in which the said processor comprises:

a means of reception of the start-up sequence transmitted by the said remote modem (16, 34, 36, 38, 48),

a means of control for passing to reception at the rate of one bit per baud at the end of the reception of the start-up sequence transmitted by the said remote modem and the checking of the contents of the messages received from the said modem, at the rate of one bit per baud,

a second means of storage of the second supervision message received from the transmission medium when the said control modem has detected in this message the presence of the said second means of identification (SH) and that of its own address in the means of addressing (AM),

a means of detection of the report from the said remote modem contained in the second supervision message received,

a means of preparation of a report message containing the result of the execution of the control signal on the basis of the second supervision message received from the said remote modem, and

a second means of transmission of the report message by the said control modem to the data terminal equipment on the data reception path (RD) of the data terminal equipment.

4.  Control modem according to Claim 1, for monitoring a network of modems in which, when the control message received by the said control modem and originating from the data terminal equipment is in error,

the said means of preparation of the said control modem prepares a report message specifying the errors contained in the control message received, and

the said second means of transmission of the said control modem transmits a report message to the data terminal equipment on the data reception path (RD) of the data terminal equipment.

5.  Control modem according to Claim 3, for monitoring a network of modems in which, if no second supervision message containing a report from the said modem and originating from the latter is received after a predetermined waiting time,

the said means of preparation of the said control modem prepares a report message specifying that no report from the said remote modem has been received, and

the said second means of transmission of the said control modem transmits a report message to the data terminal equipment on the data reception path (RD) of the data terminal equipment.

6.  Local control modem for monitoring a network of modems which comprises a data terminal equipment (10), connected to the said control modem (46) and a remote modem (48) linked to the said control modem by a transmission medium (50), each of the said modems comprising several channels (A-D) and a basic modem (46B, 48B) and exchanging bits of data between themselves at a transmission rate of n bits per baud, n being a positive integer greater than one, the data terminal equipment being linked to each of the channels of the said control modem by a data transmission path (TDA, TDB, TDC, TDD) and a data reception path (RDA, RDB, RDC, RDD) on which the data terminal equipment transmits and receives data and control messages respectively, the said control modem comprising a processor having means for performing permanent checking by the said control modem of the contents of the messages received from the data terminal equipment on each of the data transmission paths (TDA, TDB, TDC, TDD) linked to the data terminal equipment, so as to detect the transmission by the data terminal equipment desiring to initiate a monitoring of the network of modems, on one of the data transmission paths (TDA, TDB, TDC, TDD), of a control message comprising a first means of identification (H), a first means of addressing (AM), an indicator of transmission mode (M), and a means of control (C),

the said control modem being characterised in that the said processor comprises:

a first means of storage of the control message received on one of the transmission paths (TDA, TDB, TDC, TDD) when the presence of the first means of identification (H) and that of the address of the said

25

control modem have been detected in this message,
a means of generation, on the basis of the control message received, of a first supervision message comprising a second means of identification (SH), a second means of addressing (CH) identifying which of the channels of the said control modem has received the control message, and the first means of addressing (AM), the indicator of transmission mode (M) and the means of control (C) which were contained in the control message received, when the indicator of transmission mode specifies a first transmission mode, and the means of control specifies a control signal for the said remote modem, and a first means of transmission on the transmission medium of a start-up sequence then of the first supervision message, the said first supervision message being transmitted at the rate of one bit per baud whatever the rate of the data exchanged by the said control modem and remote modem.

7. Control modem according to Claim 6 for monitoring a network of modems in which the said remote modem (48) comprises a processor having a means of reception of the start-up sequence transmitted by the said control modem (46),
a means of control for passing to reception at the rate of one bit per baud at the end of the reception of the start-up sequence, and the checking of the contents of the messages received from the said control modem after the initialisation sequence, at the rate of one bit per baud,
a means of storage of the first supervision message received from the transmission medium when the said remote modem has detected in this message the presence of the second means of identification (SH) and that of its own address in the first means of addressing (AM),
a means of execution of the control signal specified by the means of control contained in the first supervision message received,
a means of preparation of a report containing the result of the execution of the control signal,
a means of generation of a second supervision message comprising the contents of the first supervision message received to which the report is added, and
a means of successive transmission on the transmission medium of a start-up sequence, then of the second supervision message, the said second supervision message being transmitted at the rate of one bit per baud whatever the rate of the data exchanged by the said control modem and remote modem.

8. Control modem (46) according to Claim 7, in which the said processor comprises:
a means of reception of the start-up sequence transmitted by the said remote modem (48),
a means of control for passing to reception at the rate of one bit per baud at the end of the reception of the start-up sequence, and the checking of the contents of the messages received from the said remote modem after the initialisation sequence, at the rate of one bit per baud,
a second means of storage of the second supervision message received from the transmission medium when the said control modem has detected in this message the presence of the second means of identification (SH) and that of its own address,
a means of detection of the report from the said remote modem contained in the second supervision message received,
a means of preparation of a report message containing the result of the execution of the control signal on the basis of the second supervision message received from the said remote modem, and
a second means of transmission of the report message by the said control modem on the data reception path (RDA, RDB, RDC, RDD) of the channel which has received the control message from the data terminal equipment.

9. Control modem according to Claim 6, for monitoring a network of modems in which, when the indicator of transmission mode contained in the control message received by the said control modem (46) from the data terminal equipment specifies a second mode of transmission, the address of the channel which has received the control message is added to the control message received, and the control message thereby resulting is transmitted on the transmission medium in data mode.

**Patentansprüche**

1. Lokales Steuerungsmodem zum Überwachen eines Modemnetzes, das folgendes aufweist: eine Datenstation (10), die mit dem Steuerungsmodem (14, 30, 46) über einen Datenübertragungskanal (TD) und einen Datenempfangskanal (RD) verbunden ist, auf welchen die Datenstation Daten- und Steuerungsnachrichten überträgt beziehungsweise empfängt und ein entferntes Modem (16, 34, 36, 38, 48), das mit dem Steuerungsmodem durch ein Übertragungsmittel (18, 32, 50) verbunden ist, wobei jedes der

EP 0 200 842 B1

Modems in einem Datenmodus mit einem Übertragungstakt von n Bits pro Baud arbeitet, wo n eine positive ganze Zahl und größer als Eins ist, das Steuerungsmodem einen Prozessor aufweist, der Mittel besitzt, um das ständige Überwachen des Inhalts von Nachrichten, die von der Datenstation auf dem Datenübertragungskanal (TD) empfangen werden, so durchzuführen, daß die Übertragung mittels der Datenstation unter dem Erfordernis des Einleitens einer Überwachung des Modemnetzes auf dem Datenübertragungskanal (TD) für eine Steuerungsnachricht erfaßt wird, die ein erstes Identifizierungsmittel (H), ein Adreßmittel (AM) und ein Steuerungsmittel (C) enthält,

wobei das Steuerungsmodem dadurch gekennzeichnet ist, daß der Prozessor folgendes aufweist:

ein erstes Speicherungsmittel für die Steuerungsnachricht, die auf dem Datenübertragungskanal (TD) empfangen wird, wenn das Steuerungsmodem in dieser Nachricht das Vorhandensein eines ersten Identifizierungsmittels (H) und jenes seiner eigenen Adresse in dem Adreßmittel (AM) erfaßt hat,

ein Mittel, um von der Steuerungsnachricht ausgehend eine erste Überwachungsnachricht zu erzeugen, die ein zweites Identifizierungsmittel (SH) und das Adreßmittel (AM) und das Steuerungsmittel (C) enthält, die in der Steuerungsnachricht enthalten waren, wenn diese letztere einen Befehl für das entfernte Modern spezifiziert und

ein erstes Mittel um auf dem Übertragungsmittel eine Folge zum Ingangsetzen zu übertragen, und sodann eine erste Überwachungsnachricht, wobei die erste Überwachungsnachricht mit dem Takt von einem Bit pro Baud, unabhängig von dem Takt der mittels des Steuerungsmodems und des entfernten Modems ausgetauschten Daten übertragen wird.

**2.** Steuerungsmodem nach Anspruch 1, zum Überwachen eines Modemnetzes in welchem das entfernte Modern (16, 34, 36, 38, 48) einen Prozessor aufweist, der folgendes besitzt:

ein Mittel zum Empfangen der Folge zum Ingangsetzen, die mittels des Steuerungsmodems übertragen wird,

ein Steuerungsmittel für den Durchlauf zu einem Empfang mit dem Takt von einem Bit pro Baud zu dem Ende des Empfangs der Folge zum Ingangsetzen und für das Überwachen des Inhalts von Nachrichten, die von dem Steuerungsmodem nach der Initialisierungsfolge mit dem Takt von einem Bit pro Baud empfangen werden,

ein Speicherungsmittel für die erste Überwachungsnachricht, die von dem Übertragungsmittel empfangen wird, wenn das Steuerungsmittel in dieser Nachricht das Vorhandensein eines zweiten Identifizierungsmittels (SH) und der Adresse des Steuerungsmodems in dem Adreßmittel (AM) erfaßt hat,

ein Mittel zum Ausführen des von dem Steuerungsmittel (C) spezifizierten Befehls, der in der ersten empfangenen Überwachungsnachricht enthalten ist,

ein Mittel zum Erstellen eines Protokolls, welches das Ergebnis der Ausführung des Befehls enthält,

ein Mittel zum Erzeugen einer zweiten Überwachungsnachricht, welche den Inhalt der ersten empfangenen Überwachungsnachricht enthält, für welche das Protokoll stellvertretend ist und

ein Mittel zum Übertragen einer Folge zum Ingangsetzen auf dem Übertragungsmittel und einer zweiten Überwachungsfolge, wobei die zweite Überwachungsnachricht mit dem Takt von einem Bit pro Baud, unabhängig von dem Takt der mittels des Steuerungsmodems und des entfernten Modems ausgetauschten Daten übertragen wird.

**3.** Steuerungsmodem nach Anspruch 2, bei welchem der Prozessor folgendes aufweist:

ein Mittel zum Empfangen der Folge zum Ingangsetzen, die mittels des entfernten Modems (16, 34, 36, 38, 48) übertragen wird,

ein Steuerungsmittel für den Durchlauf zu einem Empfang mit dem Takt von einem Bit pro Baud zu dem Ende des Empfangs der Folge zum Ingangsetzen mittels des entfernten Modems und für das Überwachen des Inhalts von Nachrichten, die von dem Modem mit dem Takt von einem Bit pro Baud empfangen werden,

ein zweites Speicherungsmittel für die zweite Überwachungsnachricht, die von dem Übertragungsmittel empfangen wird, wenn das Steuerungsmittel in dieser Nachricht das Vorhandensein eines zweiten Identifizierungsmittels (SH) und jenes seiner eigenen Adresse in dem Adreßmittel (AM) erfaßt hat,

ein Mittel zum Erfassen des Protokolls des entfernten Modems, das in der zweiten empfangenen Überwachungsnachricht enthalten ist,

ein Mittel zum Erstellen einer Protokollnachricht, welche das Ergebnis der Ausführung des Befehls von der zweiten empfangenen Überwachungsnachricht des entfernten Modems ausgehend enthält und

ein zweites Mittel zum Übertragen der Protokollnachricht mittels des Steuerungsmodems zu der Datenstation auf dem Datenempfangskanal (RD) der Datenstation.

27

**4.** Steuerungsmodem nach Anspruch 1, zum Überwachen eines Modemnetzes, in welchem wenn die mittels des Steuerungsmodems empfangene Steuerungsnachricht und die aus der Datenstationseinrichtung einlangt fehlerhaft ist,

das Erstellmittel des Steuerungsmodems eine Protokollnachricht erstellt, welche die Fehler spezifiziert, die in der empfangenen Steuerungsnachricht enthalten sind und

das zweite Übertragungsmittel des Steuerungsmodems eine Protokollnachricht auf dem Datenempfangskanal (RD) der Datenstationseinrichtung zu der Datenstation überträgt.

**5.** Steuerungsmodem nach Anspruch 3, zum Überwachen eines Modemnetzes, in dem falls keine zweite Überwachungsnachricht, die ein Protokoll des Modems enthält und die aus diesem letzteren einlangt nach einer vorbestimmten Zeitsperre empfangen wird,

das Erstellmittel des Steuerungsmodems eine Protokollnachricht erstellt, die spezifiziert, daß kein Protokoll des entfernten Modems empfangen wurde und

das zweite Übertragungsmittel des Steuerungsmodems eine Protkollnachricht auf dem Datenempfangskanal (RD) der Datenstationseinrichtung zu der Datenstationseinrichtung überträgt.

**6.** Lokales Steuerungsmodem zum Überwachen eines Modemnetzes, das folgendes aufweist: eine Datenstation (10), die mit dem Steuerungsmodem (46) und einem entfernten Modern (48) verbunden ist, das mit dem Steuerungsmodem über ein Mittel (50) zum Übertragen verbunden ist, wobei jedes der Modems mehrere Kanäle (A-D) und ein Basismodem (46B, 48B) aufweist und sie untereinander Datenbits mit einem Übertragungstakt von n Bits pro Baud austauschen, wo n eine positive ganze Zahl und größer als Eins ist, die Datenstation mit jedem der Kanäle des Steuerungsmodems über einen Datenübertragungskanal (TDA, TDB, TDC, TDD) und einen Datenempfangskanal (RDA, RDB, RDC, RDD) verbunden ist, auf welchem die Datenstation Daten- und Steuerungsnachrichten überträgt beziehungsweise empfängt, wobei das Steuerungsmodem einen Prozessor aufweist, der Mittel besitzt, um das ständige Überwachen des Inhalts von Nachrichten mittels des Steuerungsmodems, die von der Datenstation auf jedem der mit der Datenstation verbundenen Datenübertragungskanäle (TDA, TDB, TDC, TDD) empfangen werden, so durchzuführen, daß die Übertragung mittels der Datenstationseinrichtung unter dem Erfordernis des Einleitens einer Überwachung des Modemnetzes auf einem der Datenübertragungskanäle (TDA, TDB, TDC, TDD) für eine Steuerungsnachricht erfaßt wird, die ein erstes Identifizierungsmittel (H), ein erstes Adreßmittel (AM), einen Übertragungsmodusanzeiger (M) und ein Steuerungsmittel (C) enthält,

wobei das Steuerungsmodem dadurch gekennzeichnet ist, daß der Prozessor folgendes aufweist:

ein erstes Speicherungsmittel für die Steuerungsnachricht, die auf einem der Datenübertragungskanäle (TDA, TDB, TDC, TDD) empfangen wird, wenn das Vorhandensein eines ersten Identifizierungsmittels (H) und jenes der Adresse des Steuerungsmodems in dieser Nachricht erfaßt wurden,

ein Mittel, um von der empfangenen Steuerungsnachricht ausgehend eine erste Überwachungsnachricht zu erzeugen, die folgendes enthält: ein zweites Identifizierungsmittel (SH), ein zweites Adreßmittel (CH) das jenen der Kanäle des Steuerungsmodems identifiziert, welcher die Steuerungsnachricht empfangen hat und das erste Adreßmittel (AM), den Übertragungsmodusanzeiger (M) und das Steuerungsmittel (C), die in der empfangenen Steuerungsnachricht enthalten waren, wenn der Übertragungsmodusanzeiger einen ersten Übertragungsmodus spezifiziert und das Steuerungsmittel einen Befehl für das entfernte Modem spezifiziert und

ein erstes Mittel zum Übertragen einer Folge zum Ingangsetzen, auf dem Übertragungsmittel sodann einer ersten Überwachungsnachricht, wobei die erste Überwachungsnachricht mit dem Takt von einem Bit pro Baud, unabhängig von dem Takt der mittels des Steuerungsmodems und des entfernten Modems ausgetauschten Daten übertragen wird.

**7.** Steuerungsmodem nach Anspruch 6, zum Überwachen eines Modemnetzes, in welchem das entfernte Modem (48) einen Prozessor aufweist, der folgendes besitzt: ein Mittel zum Empfangen der Folge zum Ingangsetzen, die mittels des Steuerungsmodems (46) übertragen wird,

ein Steuerungsmittel für den Durchlauf zu einem Empfang mit dem Takt von einem Bit pro Baud zu dem Ende des Empfangs der Folge zum Ingangsetzen und für das Überwachen des Inhalts von Nachrichten, die von dem Steuerungsmodem nach der Initialisierungsfolge mit dem Takt von einem Bit pro Baud empfangen werden,

ein Speicherungsmittel für die erste Überwachungsnachricht, die von dem Mittel zum Übertragen empfangen wird, wenn das entfernte Modem in dieser Nachricht das Vorhandensein des zweiten Identifizierungsmittels (SH) und jenes seiner eigenen Adresse in dem ersten Adreßmittel (AM) erfaßt hat,

ein Mittel zum Ausführen des von dem Steuerungsmittel spezifizierten Befehls, der in der ersten empfangenen Überwachungsnachricht enthalten ist,

ein Mittel zum Erstellen eines Protokolls, welches das Ergebnis der Ausführung des Befehls enthält,

ein Mittel zum Erzeugen einer zweiten Überwachungsnachricht, welche den Inhalt der ersten empfangenen Überwachungsnachricht enthält, für welche das Protokoll stellvertretend ist und

ein Mittel zum Übertragen einer Folge zum Ingangsetzen auf dem Übertragungsmittel und sodann der zweiten Überwachungsnachricht, wobei die zweite Überwachungsnachricht mit dem Takt von einem Bit pro Baud, unabhängig von dem Takt der mittels des Steuerungsmodems und des entfernten Modems ausgetauschten Daten übertragen wird.

8. Steuerungsmodem (46) nach Anspruch 7, bei welchem der Prozessor folgendes aufweist:

ein Mittel zum Empfangen der Folge zum Ingangsetzen, die mittels des entfernten Modems (48) übertragen wird,

ein Steuerungsmittel für den Durchlauf zu einem Empfang mit dem Takt von einem Bit pro Baud zu dem Ende des Empfangs der Folge zum Ingangsetzen und für das Überwachen des Inhalts von Nachrichten, die von dem entfernten Modem nach der Initialisierungsfolge mit dem Takt von einem Bit pro Baud empfangen werden,

ein zweites Speicherungsmittel für die zweite Überwachungsnachricht, die von dem Mittel zum Übertragen empfangen wird, wenn das Steuerungsmittel in dieser Nachricht das Vorhandensein des zweiten Identifizierungsmittels (SH) und jenes seiner eigenen Adresse erfaßt hat,

ein Mittel zum Erfassen des Protokolls des entfernten Modems, das in der zweiten empfangenen Überwachungsnachricht enthalten ist,

ein Mittel zum Erstellen einer Protokollnachricht, welche das Ergebnis der Ausführung des Befehls von der zweiten empfangenen Überwachungsnachricht des entfernten Modems ausgehend enthält und

ein zweites Mittel zum Übertragen der Protokollnachricht mittels des Steuerungsmodems auf dem Datenempfangskanal (RDA, RDB, RDC, RDD) des Kanals welcher die Überwachungsnachricht der Datenstation empfangen hat.

9. Steuerungsmodem nach Anspruch 6 zum Überwachen eine Modemnetzes, bei welchem, wenn der Übertragungsmodusanzeiger, der in der von dem Steuerungsmodem (46) empfangenen Steuerungsnachricht enthalten ist, von der Datenstation ausgehend einen zweiten Übertragungsmodus spezifiziert, die Adresse des Kanals, welcher die Steuerungsnachricht empfangen hat, für die empfangene Steuerungsnachricht stellvertretend ist und die daraus resultierende Steuerungsnachricht auf dem Übertragungsmittel in einem Datenmodus übertragen wird.

29

FIG. 1

EP 0 200 842 B1

FIG.2

FIG.3

FIG.4

31

EP 0 200 842 B1

FIG.5

FIG. 6

FIG.7

FIG.8

FIG.9

FIG. 10

EP 0 200 842 B1

FIG. 11A

FIG. 11B

EP 0 200 842 B1